(19) Europäisches Patentamt
European Patent Office
Office européen des brevets

(11) EP 3 336 802 B1

(12) **EUROPEAN PATENT SPECIFICATION**

(45) Date of publication and mention
of the grant of the patent:
**16.10.2019 Bulletin 2019/42**

(51) Int Cl.:
**G06T 7/00** (2017.01)

(21) Application number: **17205993.3**

(22) Date of filing: **07.12.2017**

(54) **METHOD AND DEVICE FOR IDENTIFYING SINGLE MOLECULE FROM IMAGE AND METHOD AND DEVICE FOR COUNTING SINGLE MOLECULE FROM IMAGE**

VERFAHREN UND VORRICHTUNG ZUR IDENTIFIZIERUNG EINZELNER MOLEKÜLE AUS EINEM BILD UND VERFAHREN UND VORRICHTUNG ZUM ZÄHLEN VON EINZELMOLEKÜLEN AUS EINEM BILD

PROCÉDÉ ET DISPOSITIF POUR IDENTIFIER UNE MOLÉCULE UNIQUE À PARTIR D'UNE IMAGE ET PROCÉDÉ ET DISPOSITIF POUR COMPTER UNE MOLÉCULE UNIQUE À PARTIR D'UNE IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2016 CN 201611129604**
**24.07.2017 CN 201710607586**
**24.08.2017 PCT/CN2017/098838**

(43) Date of publication of application:
**20.06.2018 Bulletin 2018/25**

(73) Proprietor: **GeneMind Biosciences Company Limited**
**Luohu District, Shenzhen City, 518023 (CN)**

(72) Inventors:
• **Xu, Weibin**
**Luohu District, Shenzhen City, Guangdong (CN)**
• **Jin, Huan**
**Luohu District, Shenzhen City, Guangdong (CN)**
• **Yan, Qin**
**Luohu District, Shenzhen City, Guangdong (CN)**
• **Jiang, Zefei**
**Luohu District, Shenzhen City, Guangdong (CN)**
• **Zhou, Zhiliang**
**Luohu District, Shenzhen City, Guangdong (CN)**

(74) Representative: **HGF Limited**
**8th Floor**
**140 London Wall**
**London EC2Y 5DN (GB)**

(56) References cited:
• **YAN GAO ET AL: "Single molecule targeted sequencing for cancer gene mutation detection", SCIENTIFIC REPORTS, vol. 6, 19 May 2016 (2016-05-19), page 26110, XP055332949, DOI: 10.1038/srep26110**
• **HUGO MCGUIRE ET AL: "Automating Single Subunit Counting of Membrane Proteins in Mammalian Cells", JOURNAL OF BIOLOGICAL CHEMISTRY, vol. 287, no. 43, 19 October 2012 (2012-10-19), pages 35912-35921, XP055472897, US ISSN: 0021-9258, DOI: 10.1074/jbc.M112.402057**
• **JINGHE YUAN ET AL: "Analysis of the Steps in Single-Molecule Photobleaching Traces by Using the Hidden Markov Model and Maximum-Likelihood Clustering", CHEMISTRY - AN ASIAN JOURNAL, vol. 9, no. 8, 1 August 2014 (2014-08-01), pages 2303-2308, XP055472898, DE ISSN: 1861-4728, DOI: 10.1002/asia.201402147**
• **DANIEL J ROLFE ET AL: "Automated multidimensional single molecule fluorescence microscopy feature detection and tracking", EUROPEAN BIOPHYSICS JOURNAL ; WITH BIOPHYSICS LETTERS, SPRINGER, BERLIN, DE, vol. 40, no. 10, 18 September 2011 (2011-09-18), pages 1167-1186, XP019957723, ISSN: 1432-1017, DOI: 10.1007/S00249-011-0747-7**

**Description**

**CROSS REFERENCE TO RELATED APPLICATION**

This application claims the benefit of PCT/CN2017/098838, filed August 24, 2017, Chinese Application No. 201611129604.1, filed December 9, 2016, and Chinese Application No. 201710607586.1, filed July 24, 2017.

**FIELD**

The present disclosure relates to a field of gene sequencing technology, and more particularly relates to a method and a device for identifying a single molecule, a method and a device for counting a single molecule and a system for processing a single molecule.

**BACKGROUND**

In the related art, the third generation sequencing technology includes a single molecule sequencing technology based on imaging optical detections. Moreover, the single molecule sequencing technology is a technology for identifying base groups according to optical signals and electrical signals. Specifically, a base group is identified by fluorescence which is a light intensity emitted from an excited state to a ground state at a specific power laser irradiation. However, due to different fluorophores illumine for different time durations and have different light intensities, as well as the presence of background noise, it is possible to cause errors for identification of the single molecules. At the same time, an effective number of single molecules may be reduced by uneven distribution of DNA chain and agglomeration of base groups.

The existing methods rely mainly on the human eye to identify and count single molecules on a collected fluorescence image, but these methods cost a lot of labor and time. With reference to phonetic identification, if a method according to HMM (Hidden Markov Model) and machine study is used, a lot of training is required and operating efficiency is not high. The studies of Y. Gao et al. "Single molecule targeted sequencing for cancer gene mutation detection", Scientific Reports, vol. 6, p. 26110-26120, May 2016, and H. McGuire et al., "Automating Single Subunit Counting of Membrane Proteins in Mammalian Cells", Journal of Biological Chemistry, vol. 287(43), p. 35912-35921, October 2012, provide some additonal background information in this domain.

**SUMMARY**

Embodiments of the present disclosure seek to solve at least one of the problems existing in the related art to at least some extent. Accordingly, embodiments of the present disclosure provide a method and a device for identifying a single photon emitting molecule from photon emissions recorded in image data as defined in claims 1 and 11, respectively, and a method for counting single photon emitting molecules from photon emissions recorded in image data as defined in claim 2.

A computer readable memory medium is also provided according to embodiments of the present disclosure as defined in claim 15. The computer readable memory medium is configured to store a program that, when executed by a computer, causes the computer to perform any method described above. The computer readable memory medium may be a read-only memory, a random access memory, a magnetic disc, an optical disc, etc.

Additional aspects and advantages of embodiments of present disclosure will be given in part in the following descriptions, become apparent in part from the following descriptions, or be learned from the practice of the embodiments of the present disclosure.

**BRIEF DESCRIPTION OF THE DRAWINGS**

These and other aspects and advantages of embodiments of the present disclosure will become apparent and more readily appreciated from the following descriptions made with reference to the accompanying drawings, in which:

Fig. 1 is a flow chart of a method for identifying a single molecule according to an embodiment of the present disclosure;
Fig. 2 is a flow chart of a method for identifying a single molecule according to an embodiment of the present disclosure;
Fig. 3 is a schematic diagram of a curve of Mexican Hat kernel in the method for identifying a single molecule according to an embodiment of the present disclosure;
Fig. 4 is a flow chart of a method for identifying a single molecule according to an embodiment of the present disclosure;
Fig. 5 is a schematic diagram of eight connection pixels in a method for identifying a single molecule according to an embodiment of the present disclosure;
Fig. 6 is a line chart of a method for identifying a single molecule according to an embodiment of the present disclosure;

Fig. 7 is a schematic diagram showing that a line chart is divided into a plurality of grids in a method for identifying a single molecule according to an embodiment of the present disclosure;

Fig. 8 is a schematic diagram of a line chart before a filtering in a method for identifying a single molecule according to an embodiment of the present disclosure;

Fig. 9 is a schematic diagram of a line chart after a filtering in a method for identifying a single molecule according to an embodiment of the present disclosure;

Fig. 10 is a line chart of a method for identifying a single molecule according to an embodiment of the present disclosure;

Fig. 11 is a histogram after equalization in a method for identifying a single molecule according to an embodiment of the present disclosure;

Fig. 12 is a flow chart of a method for identifying a single molecule according to an embodiment of the present disclosure;

Fig. 13 is a schematic diagram showing line erosion in a method for identifying a single molecule according to an embodiment of the present disclosure;

Fig. 14 is a schematic diagram showing line erosion in a method for identifying a single molecule according to an embodiment of the present disclosure;

Fig. 15 is a schematic diagram of an eight connected domain in a method for identifying a single molecule according to an embodiment of the present disclosure;

Fig. 16 is a schematic diagram indicating a connected domain in a method for identifying a single molecule according to an embodiment of the present disclosure;

Fig. 17 is a flow chart of a method for counting a single molecule according to an embodiment of the present disclosure;

Fig. 18 is a flow chart of a method for counting a single molecule according to an embodiment of the present disclosure;

Fig. 19 is a flow chart of a method for counting a single molecule according to an embodiment of the present disclosure;

Fig. 20 is a flow chart of a method for counting a single molecule according to an embodiment of the present disclosure;

Fig. 21 is a block diagram of a device for identifying a single molecule according to an embodiment of the present disclosure;

Fig. 22 is a block diagram of a device for identifying a single molecule according to an embodiment of the present disclosure;

Fig. 23 is a block diagram of a device for identifying a single molecule according to an embodiment of the present disclosure;

Fig. 24 is a block diagram of a device for counting a single molecule according to an embodiment of the present disclosure;

Fig. 25 is a block diagram of a device for counting a single molecule according to an embodiment of the present disclosure;

Fig. 26 is a block diagram of a device for counting a single molecule according to an embodiment of the present disclosure;

Fig. 27 is a block diagram of a device for counting a single molecule according to an embodiment of the present disclosure; and

Fig. 28 is a block diagram of a system for processing a single molecule according to an embodiment of the present disclosure.

## DETAILED DESCRIPTION

Reference will be made in detail to embodiments of the present disclosure, where the same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure. Instead, the embodiments of the present disclosure include all the variants, modifications and their equivalents within the spirit and scope of the present disclosure as defined by the claims.

In the description of the disclosure, it should be understood that terms such as "first" and "second" are used herein for purposes of description and are not intended to indicate or imply relative importance or significance. Thus, the feature defined with "first" and "second" may include one or more this feature. In the description of the present disclosure, "a plurality of' means two or more than two, unless specified otherwise.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

Exemplary embodiments and examples are provided as follows to show different variations of the present disclosure. In order to keep the present disclosure brief, only certain embodiments, components and settings are described. For a purpose of simplicity and clear, reference numbers and/or reference letters may be repeatedly used in different examples of the present disclosure, while the reference numbers and the reference letters are not used to instruct the relationship between the various embodiments and/or configurations.

The single photon emitting molecule corresponding to a single target/ to-be-detected molecule. In embodiments of the present disclosure, unless stated, single molecule is equivalent to single photon emitting molecule.

A method for identifying a single photon emitting molecule from photon emissions recorded in image data and a method for counting a single photon emitting molecule from photon emissions recorded in image data according to embodiments of the present disclosure may be used in biomolecule detection. The biomolecule may be a peptide, protein or nucleic acid.

In embodiments of the present disclosure, the image data may be acquired from a chip for detecting biomolecule. The to-be-detected biomolecule or the complex containing a to-be-detected biomolecule has an optical detectable label. Imaging when the labels are activated. Identifying a single photon emitting molecule from the image corresponding to identifying the signal from a to-be-detected biomolecule.

Biomolecule detection includes gene sequencing. The term "gene sequencing" in embodiments of the present disclosure is the same as nucleic acid sequencing, including DNA sequencing and/or RNA sequencing, and including long fragment sequencing and/or short fragment sequencing.

In embodiments of the present disclosure, the image may be acquired from a sequencing platform based on the principle of optical imaging, in which the sequencing platform includes but is not limited to BGI/ CG (Complete Genomics), Illumina/ Solexa, Thermo Fisher/ Life Technologies ABI SOLiD, Roche 454, SeqII, Helicos and Pacific Biosciences (PacBio) etc.. In general, sequencing on a platform includes: adding one or more nucleotide analogs with an optical detectable label to a reactor, for example, adding one or more nucleotide analogs with an optical detectable label to a chip with to-be-sequenced nucleic acid on; and imaging after the nucleotide analogs incorporated to the to-be-sequenced nucleic acid, i.e. extending a base. Normally, there will be some spots/areas/points that look brighter in the image obtained, which may come from the optical detectable labels. The spots/areas/points that look brighter may have greater intensity/ pixels than the rest of the image. A spot/area/point that looks brighter in the image may correspond to one or more to-be-sequenced nucleic acid molecules, or, one or more bases. There are no particular limitations on the type of optical detectable label, it could be any optical detectable molecule, such as physical, biological or chemical light-emitting molecule. In embodiments of the present disclosure, the optical detectable label can be a fluorescent molecule, for example, a fluorescent dye molecule.

In embodiments of the present disclosure, performing fluorescence-based sequencing of DNA/ RNA on a single-molecule sequencing platform, the single-molecule sequencing platform may come from SeqII, Helicos or Pacific Biosciences (PacBio). Single-molecule fluorescence relies on the detection of photon emission from individual labelled molecules, which is often complicated by various factors including interference from neighbouring molecules, a limited florescence lifetime due to photo-bleaching, and background optical noise from other molecules in the bulk solution. So as to the image obtained may contain a variety of information which related or irrelevant to the to-be-sequenced nucleic acid molecules.

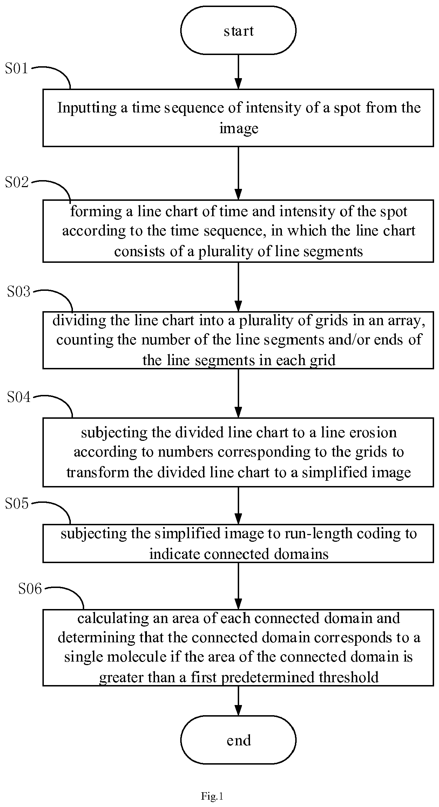

As shown in Fig. 1, the method for identifying a single photon emitting molecule from photon emissions recorded in image data according to an embodiment of the present disclosure includes: S01, inputting a time sequence of intensity of a spot from the image data; S02, forming a line chart of time and intensity of the spot according to the time sequence, in which the line chart consists of a plurality of line segments; S03, dividing the line chart into a plurality of grids in an array, counting the number of the line segments and/or ends of the line segments in each grid; S04, subjecting the divided line chart to a line erosion according to numbers corresponding to the grids to transform the divided line chart to a simplified image; S05, subjecting the simplified image to run-length coding to indicate connected domains; S06, calculating an area of each connected domain and determining that the connected domain corresponds to a single molecule if the area of the connected domain is greater than a first predetermined threshold. According to above method for identifying the single molecule, the line chart of the time sequence of the intensity of the spot is transformed into an image and further processed to run-length coding to obtain connected domains, thus resulting in a quick identification for the single molecules and a high accuracy of the identification. The method for identifying the single molecules based on the run-length coding may identify the single molecules accurately according to the time sequence data of the intensity of the spot, which is particularly suitable to the spot which contains less than 3 single molecules.In an embodiment of the present disclosure, the image may be acquired from a single molecule sequencing platform from companies such as SeqII, Helicos and Pacific Biosciences (PacBio). The original data after input is a parameter of the pixel point of the image, and the detection for the "spot" is detection for an optical signal from a single molecule or a single molecule cluster which aren't distinguishable with a specific optical resolution.

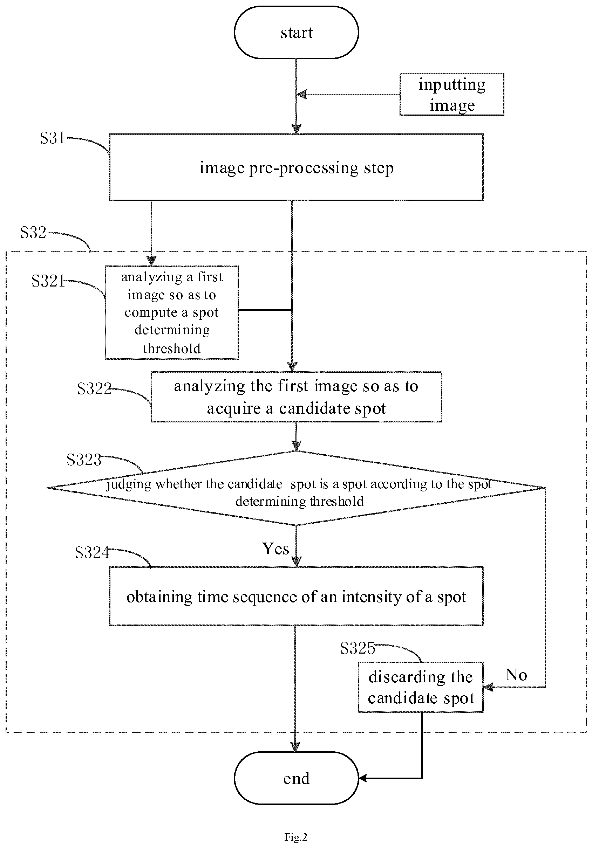

Specifically, in the step S01, when the spot is formed, the test sample is irradiated with a laser beam of a specific wavelength, and the test sample is excited to emit fluorescence, and then the fluorescence is collected by a camera to form an image containing the spot corresponding to the fluorescence emitted by the test sample, i.e., corresponding to a nucleic acid molecule. As shown in Fig. 2, the method for identifying a single molecule according to an embodiment of the present disclosure also includes: an image pre-processing step S31, including: analyzing a to-be-processed image so as to obtain a first image, in which the to-be-processed image includes at least one spot having at least one pixel point; and a spot detecting step S32, including: step S321, analyzing the first image so as to compute a spot determining threshold; step S322, analyzing the first image so as to acquire a candidate spot; step S323, judging whether the candidate spot is the spot according to the spot determining threshold; S324, acquiring the time sequence of the intensity of the spot if the candidate spot is the spot, and step S325 discarding the candidate spot if the candidate spot is not the spot.

With the method for processing an image, the to-be-processed image is processed in the image pre-processing step, such that computation in the spot detecting step may be decreased. In addition, by judging whether the candidate spot is the spot according to the spot determining threshold, the accuracy of determining the spot is improved.

Specifically, in an example, an inputted to-be-processed image may be a 16-bit TIFF image of size 512*512 or 2048*2048, and the TIFF image may be a grayscale image. Thus, the processing procedure of this method may be simplified.

In some implementations of the present disclosure, the image pre-processing step S31 includes: performing a background subtraction on the to-be-processed image so as to acquire the first image. Thus, the noise of the to-be-processed image may be decreased, such that the accuracy of the method for identifying a single molecule is improved.

In some implementations of the present disclosure, the image pre-processing step S31 includes: simplifying the to-be-processed image after the background subtraction so as to acquire the first image. Thus, the computation in the subsequent steps of the method for identifying and/or counting single molecule may be decreased.

In some implementations of the present disclosure, the image pre-processing step S31 includes: filtering the to-be-processed image so as to acquire the first image. Thus, the first image may be acquired by filtering in case of maintaining image detail features to the greatest extent, such that the accuracy of the method for identifying and/or counting single molecules is improved.

In some implementations of the present disclosure, the image pre-processing step S31 includes: performing a background subtraction on the to-be-processed image, and then filtering, so as to acquire the first image. Thus, filtering the to-be-processed image after the background subtraction may further decrease the noise of the to-be-processed image, such that the accuracy of the method for identifying and/or counting single molecules is improved.

In some implementations of the present disclosure, the image pre-processing step S31 includes: simplifying the to-be-processed image after the background subtraction and the filtering so as to acquire the first image. Thus, the computation in the subsequent steps of the method for identifying and/or counting single molecules may be decreased.

In some implementations of the present disclosure, the image pre-processing step S31 includes: simplifying the to-be-processed image so as to acquire the first image. Thus, the computation in the subsequent steps of the image processing method may be decreased.

In some implementations of the present disclosure, performing a background subtraction on the to-be-processed image includes: determining a background of the to-be-processed image by an opening operation; and performing the background subtraction on the to-be-processed image according to the background. In this way, the opening operation is for eliminating small objects, splitting objects at tenuous points and smoothing boundaries of big objects without changing the area of the image, such that the background subtracted image may be acquired precisely.

Specifically, in implementations of the present disclosure, the to-be-processed image (such as a grayscale image) is shifted by an a*a window (such as a 15*15 window), and the background of the to-be-processed image may be estimated using the opening operation (eroding first and expanding thereafter), as shown in formula 1 and formula 2:

$$g(x,y) = erode[f(x,y),B] = \min\{f(x+x',y+y') - B(x',y') \mid (x',y') \in D_b\} \qquad \text{formula 1}$$

where $g(x,y)$ represents a corroded grayscale image, $f(x,y)$ represents the original grayscale image, and $B$ represents a structural element;

$$g(x,y) = dilate[f(x,y),B] = \max\{f(x-x',y-y') - B(x',y') \mid (x',y') \in D_b\} \qquad \text{formula 2}$$

where $g(x,y)$ represents an expanded grayscale image, $f(x,y)$ represents the original grayscale image, and $B$ represents the structural element.

Therefore, the background noise may be acquired according to:

$$g = imopen(f(x,y),B) = dilate[erode(f(x,y),B)] \qquad \text{formula 3}$$

The background subtraction is performed on the original image according to formula 4.

$$f = f - g = \{f(x,y) - g(x,y) \mid (x,y) \in D\} \qquad \text{formula 4}$$

It should be noted that the specific methods of performing a background subtraction on the to-be-processed image in the present implementations may be applied to the steps of performing background subtraction on the image mentioned in any of the above-described implementations.

In some implementations of the present disclosure, performing the filtering is performing a Mexican Hat filtering. It is easy to perform the Mexican Hat filtering on an image and the cost of the method for identifying and/or counting single molecules may be reduced. Additionally, a contrast ratio of the foreground and the background may be improved by performing the Mexican Hat filtering, i.e., making the foreground brighter and the background darker.

The Mexican Hat filtering may be performed as follows: performing a Gaussian filtering on the to-be-processed image before the filtering using an m*m window, and performing a two-dimensional Laplacian sharpening on the to-be-processed image after the Gaussian filtering, m is a natural number and particularly, an odd number greater than 1. In this way, the Mexican Hat filtering may be accomplished by two steps.

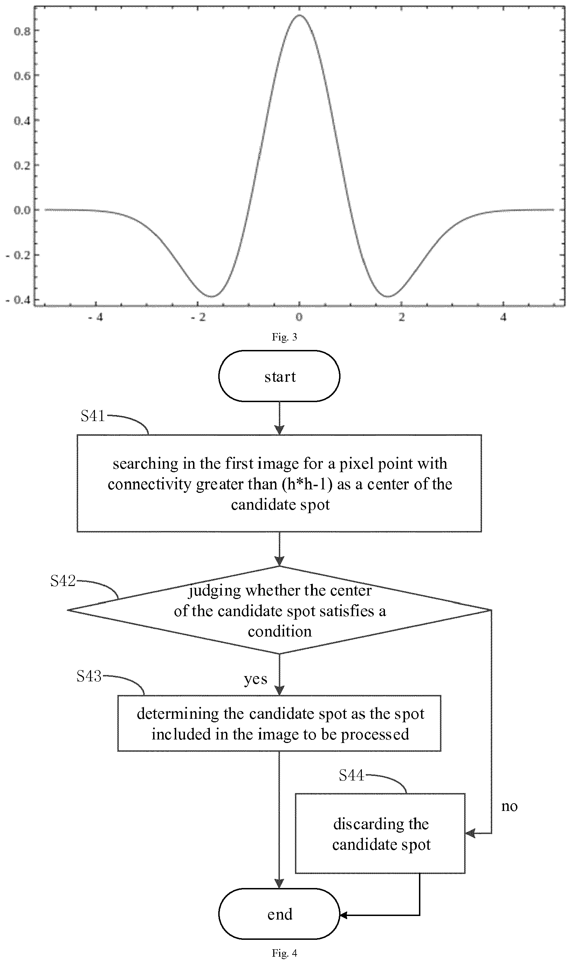

Specifically, referring to Fig. 3, the Mexican Hat kernel may be represented as the following formula.

$$\Psi(x,y) = \frac{1}{\pi\sigma^4}(1 - \frac{x^2 + y^2}{2\sigma^2})e^{-(x^2+y^2)/2\sigma^2} \qquad \text{formula 5}$$

where x and y represent coordinates of the pixel point.

Firstly, the Gaussian filtering is performed on the to-be-processed image using the m*m window, as shown in formula 6.

$$f = gaussBlur(f_{m*m}) = \sum_{t1,t2 \in m/2} f(x+t1, y+t2) * w_{t1,t2} \qquad \text{formula 6}$$

where t1 and t2 represent positions of the filter window, and $w_{t1,t2}$ represents a weight of Gaussian filtering.

Secondly, the two-dimensional Laplacian sharpening is performed on the to-be-processed image, as shown in formula 7.

$$\partial^2 f = [Kf(x,y) - kf(x-1,y-1) - kf(x-1,y+1) - kf(x+1,y-1) - kf(x+1,y+1)] \qquad \text{formula 7}$$

where K and k are Laplacian operators with regard to a sharpen effect. K and k are modified if the sharpening needs to be strengthened or weakened.

In an example, m=3 and thus m*m=3*3, the formula 6 may written as $f = gaussBlur(f_{3\times3}) = \sum_{t1,t2 \in 3/2} f(x+t1, y+t2) * w_{t1,t2}$ when performing the Gaussian filtering.

It should be noted that the specific methods of performing a Mexican Hat filtering on the to-be-processed image in the present implementations may be applied to the steps of performing Mexican Hat filtering on the image mentioned in any of the above-described implementations.

In some implementations of the present disclosure, the simplified image is a binary image. The binary image is easy to process and may be applied widely.

Specifically, in an example, a binary image may include 0 and 1 for indicating different pixel points with different attributes respectively, the binary image may be represented as $BI = \begin{cases} 0 & \text{if condition 1 is satisfied} \\ 1 & \text{if condition 2 is satisfied} \end{cases}$.

In some implementations of the present disclosure, the simplifying step includes: acquiring a signal-to-noise ratio (SNR) matrix according to the to-be-processed image before the simplifying, and simplifying the to-be-processed image before the simplifying according to the SNR matrix to obtain the first image.

In an example, a background subtraction is performed on the to-be-processed image to obtain a background subtracted image, and then a signal-to-noise ratio (SNR) matrix is acquired according to the background subtracted image. In this way, the image with less noise may be acquired and the accuracy of the method for processing an image may be improved. Specifically, in an example, the SNR matrix may be represented as

$$SNR = R \ / \ MSE = r(x,y) \ / \ (\frac{1}{wh} \sum_i \sum_j (f(x_i,y_j) - \overline{f(x,y)})^2) \text{ formula 8, where x and y}$$

represent coordinates of the pixel point, h represents a height of the image and w represents a width of the image, $i \in w, j \in h$.

Specifically, in an example, the simplified image is a binary image. The binary image may be acquired according to the SNR matrix, in which the binary image is represented as formula 9.

$$BI = \begin{cases} 0 & SNR>mean(SNR) \\ 1 & SNR<=mean(SNR) \end{cases}$$

formula 9

When computing the SNR matrix, the background subtraction and/or the filtering may be performed on the to-be-processed image, for example, the subtractive background processing step and/or the filtering processing step as described above. The background subtracted image is obtained according formula 4, and then a matrix of a ratio between the background subtracted image and the background may be acquired according to:

$$R = f \ / \ g = \{f(x,y) \ / \ g(x,y) \ | \ (x,y) \in D\}$$

formula 10

where D represents a dimension (height * width) of the image f.

Therefore, the SNR matrix may be acquired according to:

$$SNR = R \ / \ MSE = r(x,y) \ / \ (\frac{1}{wh} \sum_i \sum_j (f(x_i,y_j) - \overline{f(x,y)})^2)$$

formula 8

In some implementation of the present disclosure, analyzing the first image so as to compute a spot determining threshold includes: processing the first image by an Otsu method so as to compute the spot determining threshold. In this way, the spot determining threshold may be found by a sophisticated and simple method, such that the accuracy of the method may be improved and the cost of the method may be reduced. In addition, by computing the spot determining threshold based on the first image, the efficiency and accuracy of the method may be improved.

Specifically, the Otsu method is also called as a maximum class square error method in which the image is split according to the maximum class square error, which means that a probability of wrong split is the minimum and the accuracy is high. It is assumed that a splitting threshold between the foreground and the background of the to-be-processed image is $T$, a number of the pixel points belonging to the foreground accounts for $\omega_0$ of the whole image, and the average gray level of the pixel points belonging to the foreground is $\mu_0$; a number of the pixel points belonging to the background accounts for $\omega_1$ of the whole image, and the average gray level of the pixel points belonging to the background is $\mu_1$. The average gray level of the to-be-processed image is $\mu$, and the class square error is var. Therefore, following formulas may be acquired.

$$\mu = \omega_0 * \mu_0 + \omega_1 * \mu_1$$

formula 11

$$\text{var} = \omega_0 (\mu_0 - \mu)^2 + \omega_1 (\mu_1 - \mu)^2$$

formula 12

Formula 13 is acquired by substituting the formula 11 into the formula 12.

$$\mathrm{var} = \omega_0 \omega_1 (\mu_1 - \mu_0)^2 \qquad\qquad \text{formula 13}$$

The splitting threshold $T$ achieving the maximum class square error may be acquired by traversing, which may be configured as the spot determining threshold $T$.

In some implementations of the present disclosure, referring to fig.4, judging whether the candidate spot is the spot according to the spot determining threshold includes: step S41, searching in the first image for a pixel point with connectivity greater than (h*h-1) as a center of the candidate spot, in which there is a one-to-one correspondence between the h*h window and the spots, and each value in the h*h window corresponds to one pixel point; and step S42, judging whether the center of the candidate spot satisfies a condition of $I_{max} * A_{BI} * ceof_{guass} > T$, where $I_{max}$ is a maximum intensity of a center of the h*h window, $A_{BI}$ is a proportion of pixels in the first image being a set value in the h*h window, $ceof_{guass}$ is a correlation coefficient between a pixel in the h*h window and a two-dimensional Gaussian distribution, and $T$ is the spot determining threshold, in which h is a natural number and particularly, an odd number greater than 1. The spot corresponding to the center of the candidate spot is determined as the spot included in the to-be-processed image if the condition is satisfied (step S43), and the spot corresponding to the center of the candidate spot is discarded if the condition fails to be satisfied (step S44). In this way, the detection of the spot may be achieved.

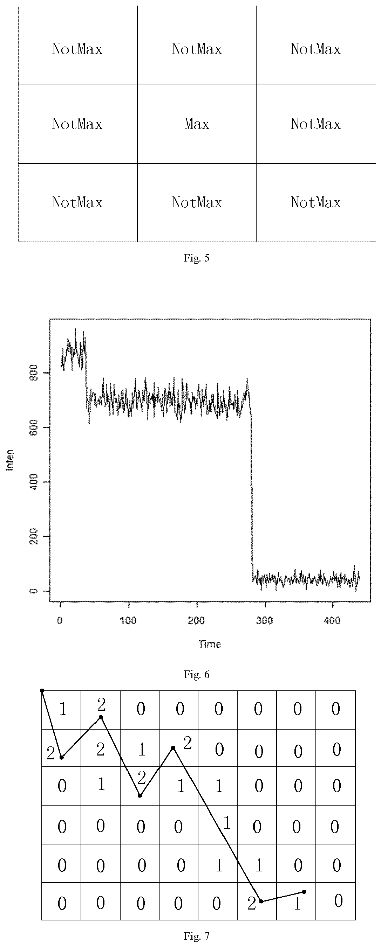

Specifically, $I_{max}$ may be understood as the maximum intensity of the center of the candidate spot. In an example, h=3. Referring to Fig.5, the pixel point with 8 connected domain is searched as the pixel point of the candidate spot. $I_{max}$ may be the maximum intensity of the center of 3*3 window, $A_{BI}$ is a proportion of pixels in the first image being a set value in the 3*3 window, and $ceof_{guass}$ is a correlation coefficient between a pixel in the 3*3 window and the two-dimensional Gaussion distribution.

The first image can be the image after the simplifying, such as the binary image. The set value in the binary image may be the value corresponding to the pixel specifying a set condition. In another example, the binary image may include 0 and 1 for indicating different pixel points with different attributes respectively. If the set value is 1, $A_{BI}$ is a proportion of pixels in the binary image being 1 in the h*h window. For example, $BI = 1$ when SNR<=mean(SNR).

In some implementations of the present disclosure, the value of p can be set as the value of m which is used in the Mexican Hat filtering, i.e. h=m. In some embodiments of the present disclosure, during the collection for forming above described image, the camera collects the fluorescence in a plurality of fields of view (FOV) in sequence according to the time sequence. Therefore, when the image data is obtained, the intensity of the spot included in the image data corresponds to the time sequence collected by the camera.

In the step S02, after the spots are obtained, points of intensities of the spots of adjacent collection times are connected by a line, thus forming a line chart of time and intensity of the spot as shown in Fig. 6. In Fig. 6, the horizontal axis represents the time of collection of fluorescence, in milliseconds (ms), and the vertical axis represents the intensity of the spots. In an example, the time interval between two adjacent collections of fluorescence is 20 ms.

In an embodiment of the present disclosure, the vertical axis corresponds to values of the intensities of the spots, and the value of the intensity of the spot is a value of the pixel. For a 16-bit TIFF image, the value of the spot pixel is in the range of 0 to 65535. For an 8-bit greyscale image, the value of the spot pixel is in the range of 0 to 255. The 16-bit image is used in the present disclosure.

In the step S03, waveform of the line chart is processed, such that the run-length coding may be performed subsequently. During processing, the line chart is divided into a plurality of grids.

In some embodiments of the present disclosure, the line chart is divided according to a time frame of the intensity when collected and a magnitude of the intensity. In this case, the line chart may be divided into grids easily to reduce the cost of the method for identifying the single molecule. Specifically, the line chart is divided into M*N grids, in which M is determined by dividing according to the time frame and N is determined by dividing according to the magnitude of the intensity. The time frame of the collected intensity is the time interval of adjacent collections of the fluorescence. In an embodiment of the present disclosure, a direction along the horizontal axis refers to a length direction of a grid and a direction along the vertical axis refers to a height direction of a grid. The length of the grid may be set as times of the time frame, such as 1 times, 2 times and 2.5 times. The height of the grid may be set flexibly. For example, for the 16-bit TIFF image, the value of the vertical axis is in the range of 0 to 65535. When grids are divided, the values of the vertical axis are normalized and then divided into 50 parts, such that the height of the grid may be set as 0.02, i.e., N=50.

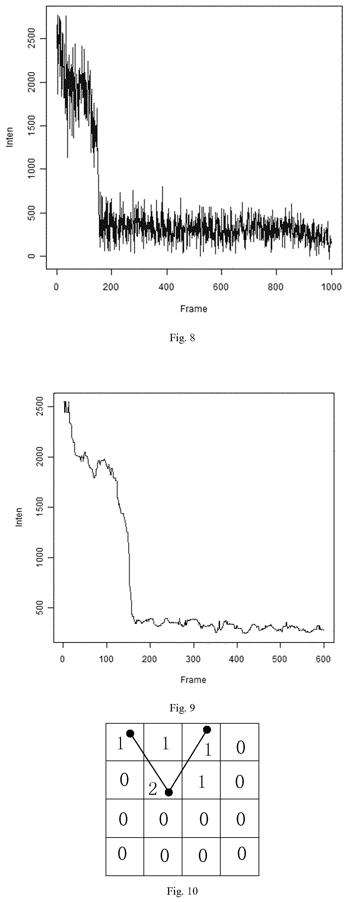

In an embodiment of the present disclosure, the time interval between two adjacent collections of fluorescence is 20 ms, and the length of one grid is equal to one time interval, of height = 0.02. As shown in Fig. 10, the number of one line segment in one grid may be 0, 1 or 2. In Fig. 10, the point represents time sequence of the intensity of the spot.

In an embodiment of the present disclosure, as shown in Fig.7, the line chart is divided into 8*6 grids and the number of the line segments and/or ends of the line segments in each grid is counted. In Fig.7, the number of line segments in each grid is counted (i.e., the number of the times segments passing through each grid). Number in each grid represents the number of the segments in each grid. In Fig.7, the point represents time sequence of the intensity of the spot.

Line erosion is erosion with line structuring element. In line erosion, a formula may be used to perform morphological operation of erosion: $g(x,y) = erode[f(x,y),B] = min\{f(x + x',y + y') - B(x',y')|(x',y') \in D_b\}$. Optionally, a line-shape element may be used, such as a W*1 window. If the number of the grid of the window is greater than a threshold T, the grid is indicated as a first value, otherwise, the grid is indicated as a second value. In this case, the line chart may be divided as a simplified image containing grids with the first value or the second value. In some embodiments of the present disclosure, the simplified image is a binary image. For example, the first value may be 1, and the second value may be 0.

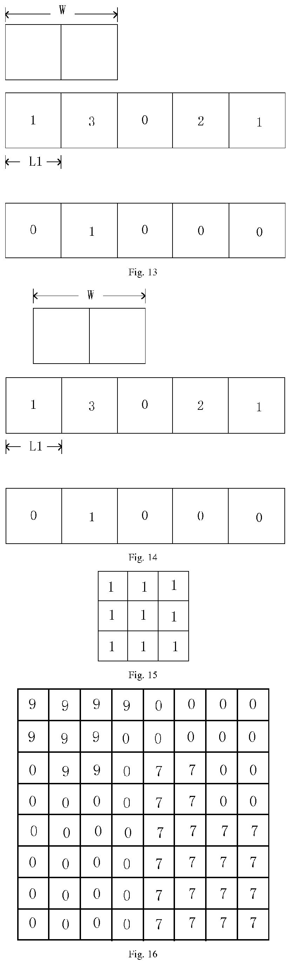

In an embodiment of the present disclosure, as shown in Fig. 13, a length of a grid is L1, W= 2*L1 and T=2. Fig. 13 shows 5 grids arranged in the length direction, and the number in each grid represents the number of such a grid. In this case, when the line erosion is performed, the window is aligned to the grid, and after the line erosion, the 5 grids are indicated as 0, 1, 0, 0, and 0, respectively.

In an embodiment of the present disclosure, as shown in Fig. 13, a length of a grid is L1, W= 2*L1 and T=2. Fig. 14 shows 5 grids arranged in the length direction, and the number in each grid represents the number of such a grid. In this case, when the line erosion is performed, the window and the grid are arranged in a staggered form, and after the line erosion, the 5 grids are indicated as 0, 1, 0, 0, and 0, respectively.

It should be noted that W is greater than or equal to the length of one grid. Optionally, W is an integer multiple of the length of one grid. In an embodiment of the present disclosure, W $\geq$ L1. Optionally, W is an integer multiple of L1.

In some embodiments of the present disclosure, the threshold T is in a range [6, 8] dependent on undulation of the waveform of the line chart. Specifically, the smaller the undulation is, the greater the threshold T is.

For ease of understanding, when run-length coding is described, the following description is made by taking 1 and 0 in the binary image as an example. It should be understood that modifications may be made by one skilled in the art, for example, to use another type of the simplified image and values except for the first and second values.

In run-time coding, an eight connection manner may be used. According to the eight connection principle, grids are connected to form the connected domain by a recursive algorithm and then the connected domain is indicated by using run-length coding. Specifically, according to an eight connection, for example, a 3*3 window used as shown in Fig. 15, a grid Q with a number which is not zero is selected to start with, if other eight grids in eight directions are not zero, the eight grids are indicated as the same number of the grid Q. By that analogy, a completed simplified image may be the indicated image as shown in Fig. 16.

In Fig. 16, different connected domains are indicated by different values. When the area of each connected domain is calculated, the number of times of occurrence of the same number is recorded as the area of the connected domain. As shown in Fig. 16, the number 9 appears 9 times, such that the area of the connected area corresponding to the number 9 is 9, and the number 7 appears 20 times, the area of the connected domain corresponding to the number 7 is 20.

In the above embodiment, a recursive algorithm is used. In other examples, a traversal algorithm may also be used to define the connected domain.

If the area of the connected domain is greater than a first determined threshold P, the connected domain corresponds to a single molecule. The value of P is related to the decay time of single molecule fluorescence. In one example, the first determined threshold P is in the range [5, 10].

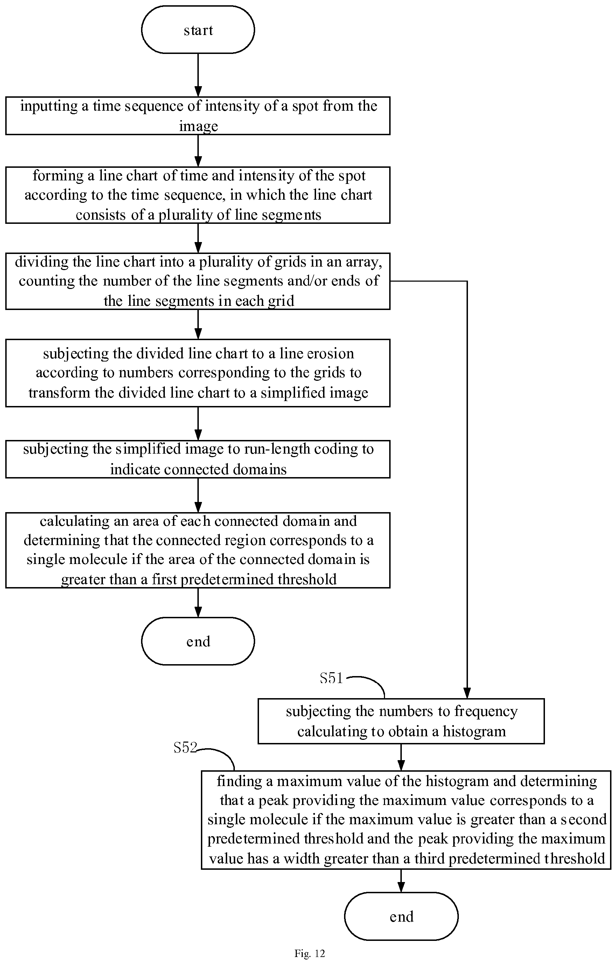

In some embodiments of the present disclosure, with reference to Fig. 12, the method for identifying the single molecule may further include: S51, dividing the intensity in groups according to a magnitude of the intensity to subject the numbers to frequency calculating to obtain a histogram; S52, finding a maximum value of the histogram, and determining that a peak providing the maximum value corresponds to a single molecule if the maximum value is greater than a second predetermined threshold and the peak providing the maximum value has a width greater than a third predetermined threshold.

As described above, the method for identifying the single molecule may thus be applied more widely. The method for identifying the single molecule based on the histogram can identify single molecule accurately according to data of the intensity and time sequence of the spot, and particularly suitable to the spot containing more than 3 single molecules. In such an embodiment, the method based on the histogram and the method based on run-length coding may be combined to identify single molecules in the line chart (time sequence of the intensity of the spot) having different waveforms accurately.

In some embodiments of the present disclosure, S51 further includes: dividing the intensity in N groups according to the magnitude of the intensity and calculating frequencies of the number in the N groups:

$$n_i = \sum_{0<=j<=M} g_{i,j}, \ 0<=i<=N$$

in which $n_i$ represents a sum of the frequencies of the numbers of an ith line of the grids, j represents a time frame, $g_{ij}$ represents a frequency of the number of grid (i, j), and M represents the number of the time frames.

Specifically, in an embodiment, a horizontal axis of the histogram represents the number of a group, and a vertical axis of the histogram represents a frequency of the number in each group. It should be noted that the value of N is equal to the value of N in M*N grids formed above, and the value of M is equal to the value of M in M*N grids formed above.

In some embodiments, the step of dividing the intensity in groups according to the magnitude of the intensity to subject the numbers to frequency calculating to obtain the histogram includes: equalizing the histogram with a L-shaped window: $n_i' = \sum_{i-L/2 <= p <= i+L/2} n_p$, $0 <= i <= N$ in which $n_p$ represents equalization of n;, $n_i'$ represents a sum of results of the equalization of n;, and p represents an integer associated with the size of the L-shaped window and the $i^{th}$ line. Thus, the histogram is distributed more uniformly to be identified easily. L-shaped window is used for equalization of the histogram, and the value of L is related to the size of the L-shaped window and the $i^{th}$ line. In general, if the single molecule has a fast fluorescence quenching, the value of L should not be too large. The accuracy of the histogram is affected by the size of the L-shaped window, and the value of L can be set flexibly to select appropriate histogram accuracy. In one embodiment, the value of L is in a range [5, 15].

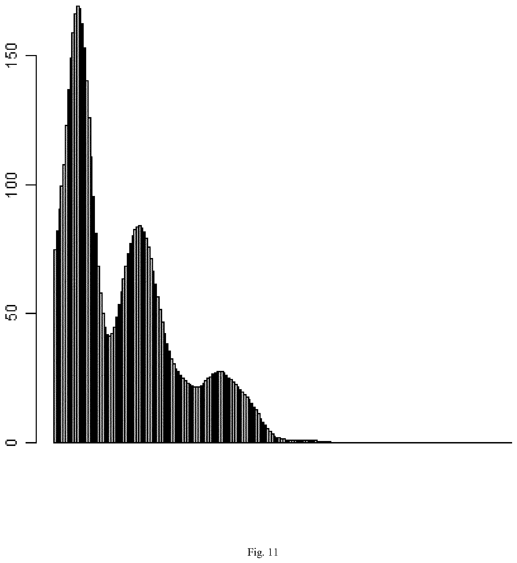

With reference to Fig. 11 being a histogram after equalization, a horizontal axis of the histogram represents the number of a group, and a vertical axis of the histogram represents a frequency of the number in each group.

In the step 52, all the maximum values of the histogram may be calculated by derivation. The second determined threshold Q and the third determined threshold H are related to the shape of the peak of the line chart. Specifically, the sharper the peak is, the greater the second determined threshold Q is, and the smaller the third determined threshold H is. The gentler the peak is, the smaller the second determined threshold Q is, the greater the third determined threshold H is. In an embodiment, the second determined threshold Q is in a range [2, 6], and the third determined threshold H is in the range [4, 10].

In an embodiment of the present disclosure, the maximum value is a top value of the peak (i.e., an inflexion point). In other words, if the maximum value in the peak meets certain conditions, the peak corresponds to a single molecule.

In some embodiments of the present disclosure, before the line chart is divided, the method for identifying the single molecule further includes: performing a filtering to the line chart, such that it is possible to eliminate the abrupt error caused by the intensity flicker and the camera sampling, and the waveform of the line graph is smoother. In particular, the modification of the waveform may be performed by using a median value of a window of a size of L2 for filtering:

$$R = medium(Z_i).$$

In an embodiment, with reference to Fig. 8 being a line chart before filtering and Fig. 9 being a line chart after filtering, it can be seen from the figures that the waveform of the filtered line chart is more smooth, which facilitates to improve the accuracy and efficiency of single molecule identification.

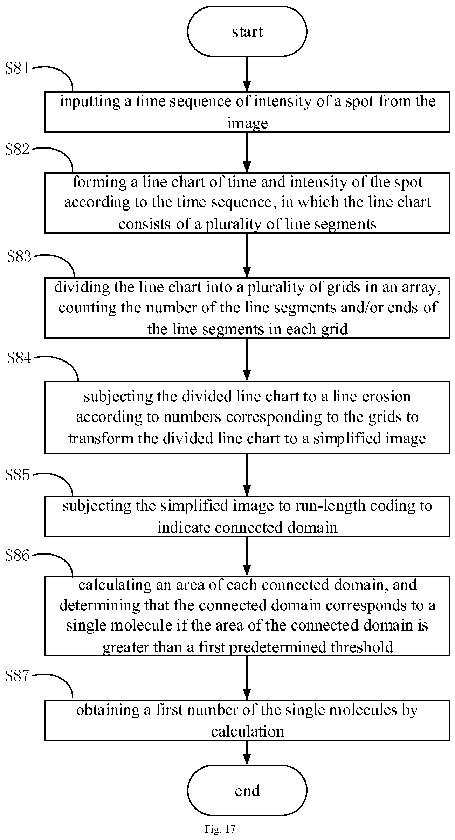

With reference to Fig. 17, a method for counting the single molecule according to an embodiment of the present disclosure includes: S81, inputting time sequence of an intensity of an spot; S82, forming a line chart of time and intensity of the spot according to the time sequence, in which the line chart consists of a plurality of line segments; S83, dividing the line chart into a plurality of grids in an array, counting the number of the line segments and/or ends of the line segments in each grid; S84, subjecting the divided line chart to a line erosion according to numbers corresponding to the grids to transform the divided line chart to a simplified image; S85, subjecting the simplified image to run-length coding to indicate connected domains; S86, calculating an area of each connected domain, and determining that the connected domain corresponds to a single molecule if the area of the connected domain is greater than a first predetermined threshold; S87, obtaining a first number of the single molecules by calculation. According to the method for counting the single molecule, the line chart of the time sequence of the intensity of the spot is processed to transform into the image, thus obtaining the connected domains by run-length coding, which results in a quick count for the single molecule and a high accuracy of the count. It should be noted that the description of the technical features and advantages of methods for identifying and/or counting the single molecule in any one of the above embodiments and examples, including explanations and descriptions of steps, parameter settings, and image pre-processing spot detection, is also applicable to the method for counting the single molecule in embodiments of the present embodiment. In order to avoid redundancy, it is not further described in detail here.

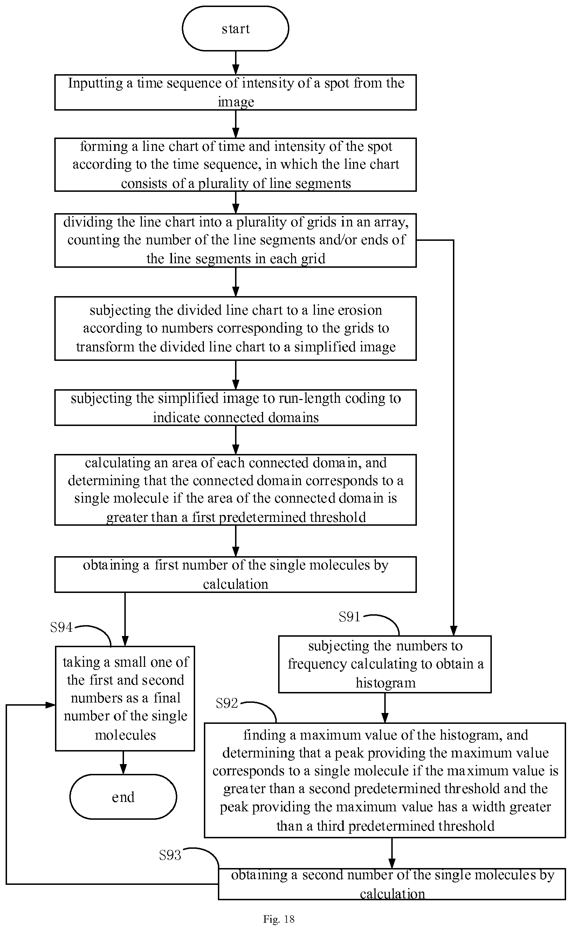

For example, in an embodiment of the present disclosure, before S83, the method for counting the single molecule may further include filtering the line chart. In another embodiment, as shown in Fig. 18, the method for counting the single molecule further includes: S91, dividing the intensity in groups according to a magnitude of the intensity to subject the numbers to frequency calculating to obtain a histogram; S92, finding a maximum value of the histogram, and determining that a peak providing the maximum value corresponds to a single molecule if the maximum value is greater than a second predetermined threshold and the peak providing the maximum value has a width greater than a third predetermined threshold; S93, obtaining a second number of the single molecules by calculation; and S94, taking a small one of the first and second numbers as a final number of the single molecules. The method for counting the single molecule based on the histogram calculation is particularly suitable to accurately find the spot containing more than 3 single molecules. The method for counting the single molecules based on the run-length coding is particularly suitable to accurately find the spot which contains ≤ 3 single molecules. In an embodiment, above two methods may be combined, and the single molecule of the line chart with different waveforms may be found and counted accurately. In an embodiment, the simplified image is a binary image.

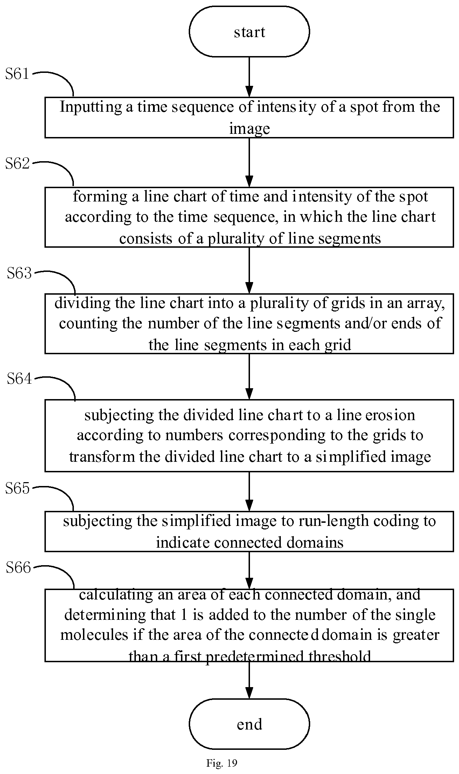

As shown in Fig. 19, a method for counting the single molecule according to an embodiment of the present disclosure includes: S61, inputting time sequence of an intensity of an spot; S62, forming a line chart of time and intensity of the spot according to the time sequence, in which the line chart consists of a plurality of line segments; S63, dividing the line chart into a plurality of grids in an array, counting the number of the line segments and/or ends of the line segments in each grid; S64, subjecting the divided line chart to a line erosion according to numbers corresponding to the grids to transform the divided line chart to a simplified image; S65, subjecting the simplified image to run-length coding to indicate connected domains; S66, calculating an area of each connected domain, and determining that 1 is added to the number of the single molecules if the area of the connected domain is greater than a first predetermined threshold.

According to the method for counting the single molecule, the line chart of the time sequence of the intensity of the spot is processed to transform into the image, thus obtaining the connected domains by run-length coding, which results in a quick count for the single molecule and a high accuracy of the count.

It should be noted that the description of the technical features and advantages of methods for identifying and/or counting the single molecule in any one of the above embodiments and examples, including explanations and descriptions of steps, parameter settings, and image pre-processing spot detection, is also applicable to the method for counting the single molecule in embodiments of the present embodiment. In order to avoid redundancy, it is not further described in detail here.

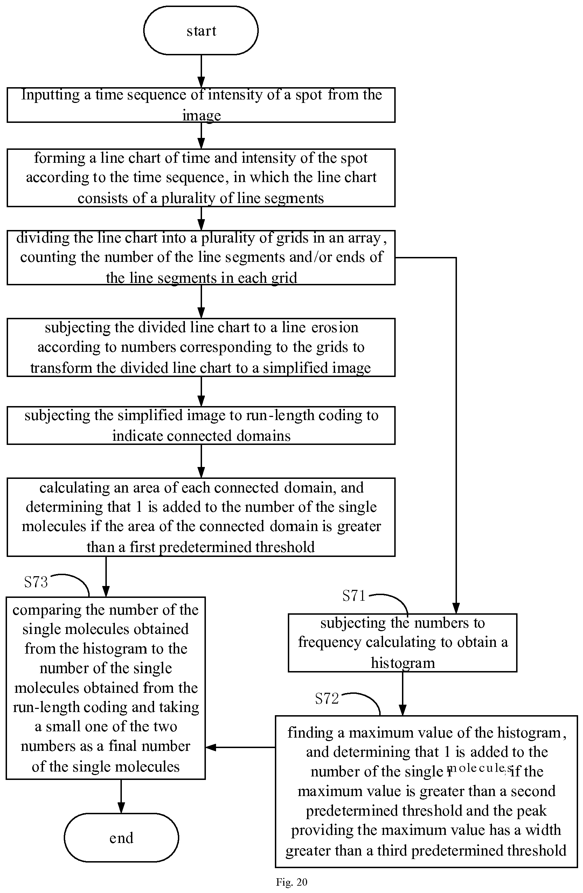

For example, in some embodiments, before S63, the method for counting the single molecule may further include filtering the line chart. In another embodiment, as shown in Fig. 20, the method for counting the single molecule further includes: S71, dividing the intensity in groups according to a magnitude of the intensity to subject the numbers to frequency calculating to obtain a histogram; S72, finding a maximum value of the histogram, and determining that 1 is added to the number of the single molecules if the maximum value is greater than a second predetermined threshold and the peak providing the maximum value has a width greater than a third predetermined threshold; S73, comparing the number of the single molecules obtained from the histogram to the number of the single molecules obtained from the run-length coding and taking a small one of the two numbers as a final number of the single molecules. Thus, the method for counting the single molecule may be applied widely and a more accurate number of the single molecules may be achieved.

The method for counting the single molecule based on the histogram calculation is particularly suitable to accurately find the spot containing more than 3 single molecules. The method for counting the single molecules based on the run-length coding is particularly suitable to accurately find the spot which contains ≤ 3 single molecules. In an embodiment, above two methods may be combined, and the single molecule of the line chart with different waveforms may be found and counted accurately. For example, the number of the single molecules based on the run-length coding is the first number and the number of the single molecules based on the histogram is the second number. The first number is compared to the second number and the smaller one of these two numbers is taken as the final number of the single molecules.

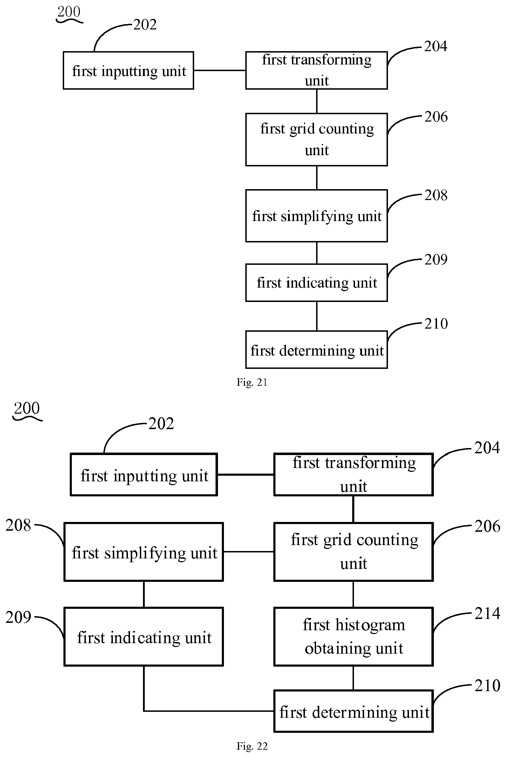

As shown in Fig. 21, a device 200 for identifying a single photon emitting molecule from photon emissions recorded in image data according to embodiments of the present disclosure is used to perform all of or part of the methods for identifying the photon emitting molecule from photon emissions recorded in image data according to any embodiment or example described above. The device 200 includes: a first inputting unit 202 configured to input a time sequence of intensity of n spot from the image data; a first transforming unit 204 configured to form a line chart of time and intensity of the spot according to the time sequence of the first inputting unit 202, in which the line chart consists of a plurality of line segments; a first grid counting unit 206 configured to divide the line chart of the first transforming unit 204 into a plurality of grids in an array, and count the number of the line segments and/or ends of the line segments in each grid; a first simplifying unit 208 configured to subject the divided line chart to a line erosion according to numbers corresponding to the grids to transform the divided line chart to a simplified image; a first indicating unit 209 configured to subject the simplified image to run-length coding to indicate connected domains; a first determining unit 210 configured to calculate an area of each connected domain and determine that the connected domain corresponds to a single molecule if the area of the connected domain is greater than a first predetermined threshold. According to the device 200 for identifying the single molecule, the line chart of the time sequence of the intensity of the spot is processed to transform into the image, thus obtaining the connected domains by run-length coding, which results in a quick identification for the single molecule and a high accuracy of the identification.

In an embodiment, the simplified image is a binary image.

It should be noted that the description of the technical features and advantages of the method for identifying the single photon emitting molecule from photon emissions recorded in image data in any one of the above embodiments and examples is also applicable to the device 200 of the present embodiment. In order to avoid redundancy, it is not further described in detail here. For example, in some embodiments, the device 200 further includes a first filtering unit 212 connected to the first grid counting unit 206, configured to filter the line chart of the first transforming unit 204 before the line chart is divided in the plurality of grids in the array.

In some embodiments of the present disclosure, in the first grid counting unit 206, the line chart is divided according to a time frame of the intensity when collected and a magnitude of the intensity.

As shown in Fig. 22, in some embodiments of the present disclosure, the device 200 also includes: a first histogram obtaining unit 214 configured to divide the intensity in groups according to a magnitude of the intensity to subject the numbers to frequency calculating to obtain a histogram; in the first determining unit 210, finding a maximum value of the histogram, and determining that a peak providing the maximum value corresponds to a single molecule if the maximum value is greater than a second predetermined threshold and the peak providing the maximum value has a width greater than a third predetermined threshold.

In some embodiments of the present disclosure, in first histogram obtaining unit 214, dividing the intensity in groups according to a magnitude of the intensity to subject the numbers to frequency calculating to obtain a histogram includes: dividing the intensity in N groups according to the magnitude of the intensity and calculating frequencies of the number in the N groups: $n_i = \sum_{0<=j<=M} g_{i,j}, \ 0<=i<=N$, in which $n_i$ represents a sum of the frequencies of the numbers of an $i^{th}$ line of the grids, j represents a time frame, $g_{ij}$ represents a frequency of the number of grid (i, j), and M represents the number of the time frames.

In some embodiments, in first histogram obtaining unit 214, dividing the intensity in groups according to a magnitude of the intensity to subject the numbers to frequency calculating to obtain a histogram includes: equalizing the histogram with a L-shaped window: $n_i' = \sum_{i-L/2<=p<=i+L/2} n_p, \ 0<=i<=N$, in which $n_p$ represents equalization of $n$;, $n_i'$ represents a sum of results of the equalization of $n$;, and p represents an integer associated with the size of the L-shaped window and the $i^{th}$ line.

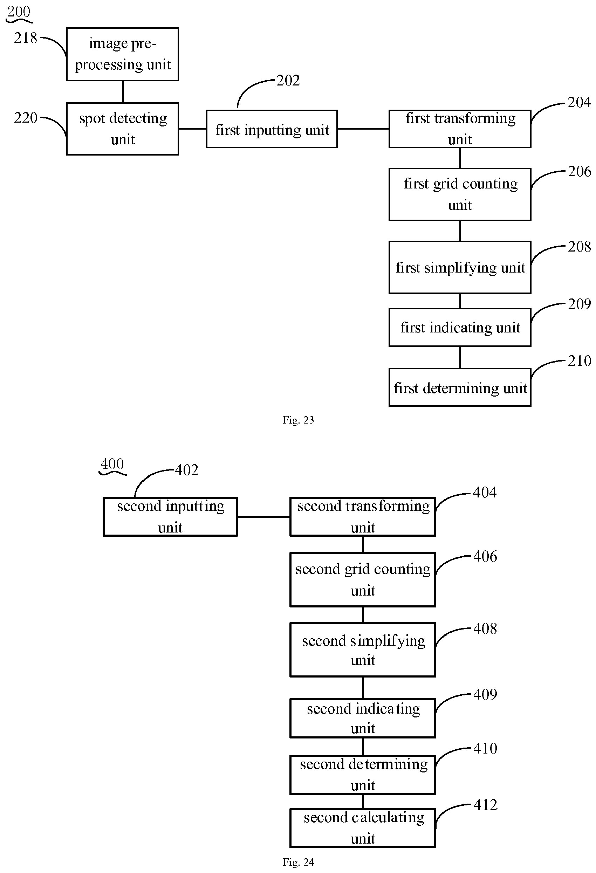

In some embodiments, as shown in Fig. 23, the device 200 also includes: an image pre-processing module 218, configured to analyze a to-be-processed image so as to obtain a first image, in which the to-be-processed image includes at least one spot having at least one pixel point; and a spot detecting module 220, configured to analyze the first image so as to compute a spot determining threshold; to analyze the first image so as to acquire a candidate spot; and to judge whether the candidate spot is a spot according to the spot determining threshold, acquiring the time sequence of the intensity of the spot if the candidate spot is a spot, and discarding the candidate spot if the candidate spot is not a spot.

In some implementations, the image pre-processing module 218 includes a background subtraction module 226. The background subtraction module 226 is configured to perform a background subtraction on the to-be-processed image so as to acquire the first image.

In some implementations, the image pre-processing module 218 includes a simplifying module 222. The simplifying module 222 is configured to simplify the to-be-processed image after the background subtraction so as to acquire the first image.

In some implementations, the image pre-processing module 218 includes an image filtering module 224. The image filtering module 224 is configured to filter the to-be-processed image so as to acquire the first image.

In some implementations, the image pre-processing module 218 includes a background subtraction module 226 and an image filtering module 224. The background subtraction module 226 is configured to perform a background subtraction on the to-be-processed image, the image filtering module 224 is configured to filter the background subtracted image so as to acquire the first image.

In some implementations, the image pre-processing module 218 includes a simplifying module 222. The simplifying module 222 is configured to simplify the to-be-processed image after the background subtraction and the filtering so as to acquire the first image.

In some implementations, the image pre-processing module 218 includes a simplifying module 222. The simplifying module 222 is configured to simplify the to-be-processed image so as to acquire the first image.

In some implementations, the background subtraction module 226 is configured to determine a background of the to-be-processed image by an opening operation; and to perform the background subtraction on the to-be-processed image according to the background.

In some implementations, the image filtering module 224 is configured to perform a Mexican Hat filtering on the to-be-processed image.

In some implementations, the simplifying module 222 is configured to perform a process to yield a binary image.

In some implementations, when using the simplifying module 222 to simplify the image, a signal-to-noise ratio matrix is acquired according to the to-be-processed image before the simplifying, and to simplify the to-be-processed image before the simplifying according to the signal-to-noise ratio matrix so as to acquire the first image. In some implementations, the spot detecting module 220 is configured to process the first image by an Otsu method so as to compute the spot determining threshold. In some implementations, the spot detecting module 220 is configured to: search in the first image for a pixel point with connectivity greater than (h*h-1) as a center of the candidate spot; and to judge whether the center of the candidate spot satisfies a condition of $I_{max} * A_{BI} * ceof_{guass} > T$, where $I_{max}$ is a maximum intensity of a center of the h*h window, $A_{BI}$ is a proportion of pixels in the first image being a set value in the h*h window, $ceof_{guass}$ is a correlation coefficient between a pixel in the h*h window and a two-dimensional Gaussian distribution, and $T$ is the spot determining threshold, in which h is a natural number and particularly, an odd number greater than 1; to determine a spot corresponding to the center of the candidate spot as the spot when the condition is satisfied; and to discard the candidate spot when the condition fails to be satisfied.

As shown in Fig. 24, a device 400 for counting a single photon emitting molecule from photon emissions recorded in image data according to embodiments of the present disclosure is used to perform all of or part of the methods for counting the single photon emitting molecule from photon emissions recorded in image data according to any embodiment or example described above. The device 400 includes: a second inputting unit 402 configured to input a time sequence of intensity of a spot from the image data; a second transforming unit 404 configured to form a line chart of time and intensity of the spot according to the time sequence of the second inputting unit 402, in which the line chart consists of a plurality of line segments; a second grid counting unit 406 configured to divide the line chart of the second transforming unit 404 into a plurality of grids in an array, and count the number of the line segments and/or ends of the line segments in each grid; a second simplifying unit 408 configured to subject the divided line chart to a line erosion according to numbers corresponding to the grids to transform the divided line chart to a simplified image; a second indicating unit 409 configured to subject the simplified image to run-length coding to indicate connected domains; a second determining unit 410 configured to calculate an area of each connected domain and determine that the connected domain corresponds to a single molecule if the area of the connected domain is greater than a first predetermined threshold; a second calculating unit 412 configured to obtain a first number of the single molecules by calculation. According to the device 400 for counting the single molecule, the line chart of the time sequence of the intensity of the spot is processed to transform into the image, thus obtaining the connected domains by run-length coding, which results in a quick count for the single molecule and a high accuracy of the count.

It should be noted that the description of the technical features and advantages of the method for counting the single photon emitting molecule from photon emissions recorded in image data in any one of the above embodiments and examples is also applicable to the device 400 in embodiments of the present embodiment. In order to avoid redundancy, it is not further described in detail here.

For example, in some embodiments, the device 400 further includes a second filtering unit 414 connected to the second grid counting unit 406, configured to filter the line chart of the second transforming unit 404 before the line chart is divided in the plurality of grids in the array.

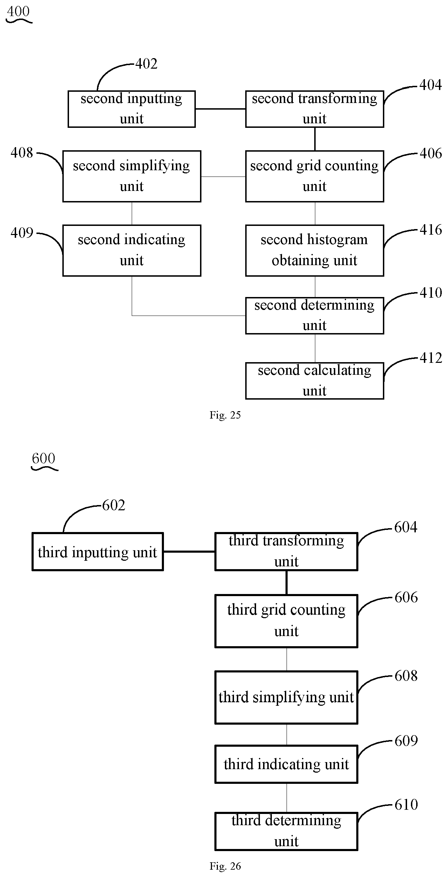

In some embodiments, as shown in Fig. 25, the device 400 further includes: a second histogram obtaining unit 416 configured to divide the intensity in groups according to a magnitude of the intensity to subject the numbers of the second grid counting unit 406 to frequency calculating to obtain a histogram, in which in the second determining unit 410, a maximum value of the histogram of the second histogram obtaining unit 416 is found and it is determined that a peak providing the maximum value corresponds to a single molecule if the maximum value is greater than a second predetermined threshold and the peak providing the maximum value has a width greater than a third predetermined threshold, and in the calculating unit 412, a second number of the single molecules is acquired by calculation and a small one of the first and second numbers is taken as a final number of the single molecules.

As shown in Fig. 26, a device 600 for counting a single photon emitting molecule from photon emissions recorded in image data according to embodiments of the present disclosure includes: a third inputting unit 602 configured to input a time sequence of intensity of a spot from the image data; a third transforming unit 604 configured to form a line chart of time and intensity of the spot according to the time sequence of the third inputting unit 602, in which the line chart consists of a plurality of line segments; a third grid counting unit 606 configured to divide the line chart of the third transforming unit 604 into a plurality of grids in an array, and count the number of the line segments and/or ends of the line segments in each grid; a third simplifying unit 608 configured to subject the divided line chart to a line erosion according to numbers corresponding to the grids to transform the divided line chart to a simplified image; a third indicating unit 609 configured to subject the simplified image to run-length coding to indicate connected domains; a third determining unit 610 configured to calculate an area of each connected domain and determine that 1 is added to the number of the single molecule if the area of the connected domain is greater than a first predetermined threshold.

According to the device 600, the line chart of the time sequence of the intensity of the spot is processed to transform into the image, thus obtaining the connected domains by run-length coding, which results in a quick count for the single molecule and a high accuracy of the count.

It should be noted that the description of the technical features and advantages of the method for counting the single molecule in any one of the above embodiments and examples is also applicable to the device 600 in embodiments of the present embodiment. In order to avoid redundancy, it is not further described in detail here.

For example, in some embodiments, the device 600 further includes a third filtering unit 612 connected to the third grid counting unit 606, configured to filter the line chart of the third transforming unit 604 before the line chart is divided in the plurality of grids in the array.

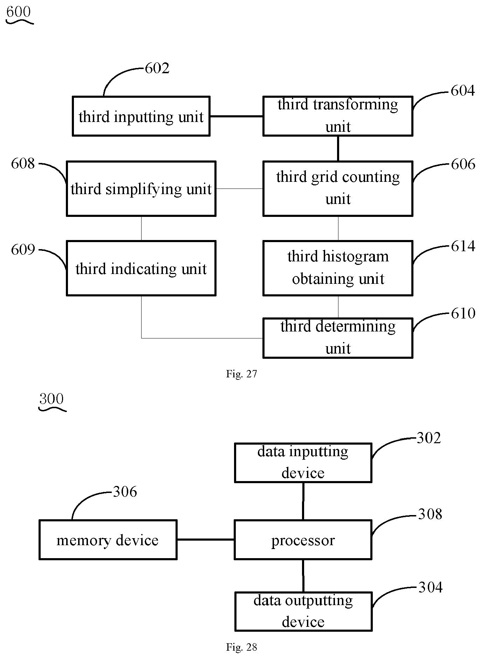

In some embodiments, as shown in Fig. 27, the device 600 further includes: a third histogram obtaining unit 614 configured to divide the intensity in groups according to a magnitude of the intensity to subject the numbers from the third grid counting unit 606 to frequency calculating to obtain a histogram, in which in the third determining unit 610, a maximum value of the histogram from the third histogram obtaining unit 614 is found and it is determined that 1 is added to the number of the single molecule if the maximum value is greater than a second predetermined threshold and the peak providing the maximum value has a width greater than a third predetermined threshold, the number of the single molecules obtained from the histogram is compared to the number of the single molecules obtained from the run-length coding, and a small one of the two numbers is taken as a final number of the single molecules.

As shown in Fig. 28, a system 300 for processing a single photon emitting molecule from photon emissions recorded in image data according to embodiments of the present disclosure includes: a data inputting device 302 configured to input data; a data outputting device 304 configured to output data; a memory device 306 configured to store data including a computer executable program; and a processor 308 configured to perform the computer executable program for performing a method for identifying a single molecule or a method for counting a single molecule according to any embodiment described above.

A computer program product comprising instructions which when the program is executed by the computer, causes the computer to carry out all or parts of the steps of the methods for identifying and/ or counting single molecule from image according to any embodiment or example described above.

A computer readable memory medium according to embodiments of the present disclosure is configured to store a program that, when executed by a computer, causes the computer to perform any method described above. The computer readable memory medium may be a read-only memory, a random access memory, a magnetic disc, an optical disc, etc.

Reference throughout this specification to "one embodiment", "some embodiments," "an embodiment", "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated that the above embodiments are explanatory and cannot be construed to limit the present disclosure, and changes, alternatives, and modifications can be made in the embodiments without departing from scope of the present disclosure by those skilled in the art, the scope of the invention being defined by the appended claims.

**Claims**

1. A computer-implemented method for identifying a single photon emitting molecule from photon emissions recorded in image data, comprising:

   a) inputting a time sequence of intensity of a spot from the image data;
   **characterised by**:
   b) forming a line chart of time and intensity of the spot according to the time sequence, wherein the line chart consists of a plurality of line segments;
   c) dividing the line chart into a plurality of grids in an array, counting the number of the line segments and/or ends of the line segments in each grid;
   d) subjecting the divided line chart to an erosion with a line structuring element according to numbers corresponding to the grids to transform the divided line chart to a simplified image, the simplified image containing grids with a first value or a second value;

e) subjecting the simplified image to run-length coding to indicate connected domains;

f) calculating an area of each connected domain and determining that the connected domain corresponds to a single molecule if the area of the connected domain is greater than a first predetermined threshold.

2. A computer-implemented method for counting single photon emitting molecules from photon emissions recorded in image data, comprising:

a) inputting a time sequence of intensity of a spot from the image data;

**characterised by**:

b) forming a line chart of time and intensity of the spot according to the time sequence, wherein the line chart consists of a plurality of line segments;

c) dividing the line chart into a plurality of grids in an array, counting the number of the line segments and/or ends of the line segments in each grid;

d) subjecting the divided line chart to an erosion with a line structuring element according to numbers corresponding to the grids to transform the divided line chart to a simplified image, the simplified image containing grids with a first value or a second value;

e) subjecting the simplified image to run-length coding to indicate connected domains; and

f.i) calculating an area of each connected domain, and determining that the connected domain corresponds to a single molecule if the area of the connected domain is greater than a first predetermined threshold and obtaining a first number of the single molecules by calculation; or

f.ii) calculating an area of each connected domain, and determining that 1 is added to the number of the single molecules if the area of the connected domain is greater than a first predetermined threshold.

3. A computer-implemented method as claimed in claim 1, further comprising:

g) dividing the intensity in groups according to a magnitude of the intensity to subject the numbers to frequency calculating to obtain a histogram;

h) finding a maximum value of the histogram and determining that a peak providing the maximum value corresponds to a single molecule if the maximum value is greater than a second predetermined threshold and the peak providing the maximum value has a width greater than a third predetermined threshold.

4. A computer implemented method as claimed in claim 2, further comprising:

A.g) dividing the intensity in groups according to a magnitude of the intensity to subject the numbers to frequency calculating to obtain a histogram;

A.h) finding a maximum value of the histogram, and determining that a peak providing the maximum value corresponds to a single molecule if the maximum value is greater than a second predetermined threshold and the peak providing the maximum value has a width greater than a third predetermined threshold;

A.i) obtaining a second number of the single molecules by calculation and taking a small one of the first and second numbers as a final number of the single molecules; or

B.g) dividing the intensity in groups according to a magnitude of the intensity to subject the numbers to frequency calculating to obtain a histogram;

B.h) finding a maximum value of the histogram, and determining that 1 is added to the number of the single molecules if the maximum value is greater than a second predetermined threshold and the peak providing the maximum value has a width greater than a third predetermined threshold;

B.i) comparing the number of the single molecules obtained from the histogram to the number of the single molecules obtained from the run-length coding and taking the smallest of the two numbers as a final number of the single molecules.

5. A computer-implemented method as claimed in any of claims 1 to 4, wherein before dividing the line chart into the plurality of grids in the array, the method further comprises filtering the line chart; and/or

wherein the line chart is divided into the plurality of grids in the array according to a time frame of the intensity when collected and a magnitude of the intensity;

optionally, the simplified image is a binary image, wherein the first value is 1 and the second value is 0.

6. A computer-implemented method as claimed in any of claims 3 to 5, wherein step g), A.g) or B.g) comprises:

dividing the intensity in N groups according to the magnitude of the intensity and calculating frequencies of the numbers in the N groups:

$$n_i = \sum_{0<=j<=M} g_{i,j}, \quad 0<=i<=N$$

wherein $n_i$ represents a sum of the frequencies of the numbers of an $i^{th}$ line of the grids, j represents a time frame, $g_{ij}$ represents a frequency of the number of grid (i, j), and M represents the number of the time frames; optionally,
equalizing the histogram with a L-shaped window:

$$n_i^{'} = \sum_{i-L/2<=p<=i+L/2} n_p, \quad 0<=i<=N$$

wherein $n_p$ represents equalization of $n_i$, $n_i'$ represents a sum of results of the equalization of n;, and p represents an integer associated with the size of the L-shaped window and the $i^{th}$ line.

7. A computer-implemented method as claimed in any of claims 1 to 6, further comprising:

an image pre-processing step comprising: analyzing the image so as to obtain a first image, wherein the image comprises at least one pixel point; and
a spot detecting step comprising:

analyzing the first image so as to compute a spot determining threshold;
analyzing the first image so as to acquire a candidate spot; and
determining whether the candidate spot is a spot according to the spot determining threshold, acquiring the time sequence of the intensity of the spot if the candidate spot is a spot, and discarding the candidate spot if the candidate spot is not a spot.

8. A computer-implemented method as claimed in claim 7, wherein the image pre-processing step comprises i) performing a background subtraction on the image so as to acquire the first image; optionally, simplifying the image after the background subtraction so as to acquire the first image; or ii) performing a filtering on the image so as to acquire the first image; or iii) performing a filtering on the image after a background subtraction, so as to acquire the first image; optionally performing a simplifying on the image after a background subtraction and the filtering, so as to acquire the first image; or iv) performing a simplifying on the image so as to acquire the first image.

9. A computer-implemented method as claimed in claim 8 parts i), iii) or iv), wherein the simplifying is: 1) a process to yield a binary image; or 2) comprises acquiring a signal-to-noise ratio matrix according to the image before the simplifying, and simplifying the image according to the signal-to-noise ratio matrix so as to acquire the first image.

10. A computer-implemented method as claimed in claim 8 parts i), iii) or iv), wherein determining whether the candidate spot is a spot according to the spot determining threshold comprises:

searching in the first image for a pixel point with connectivity greater than (h*h-1) as a center of the candidate spot, wherein h is an odd number greater than 1; and
determining whether the center of the candidate spot satisfies a condition of $I_{max} * A_{BI} * ceof_{guass} > T$, where $I_{max}$ is a maximum intensity of a center of the h*h window, $A_{BI}$ is a proportion of pixels in the first image being a set value in the h*h window, $ceof_{guass}$ is a correlation coefficient between a pixel in the h*h window and a two-dimensional Gaussian distribution, and $T$ is the spot determining threshold;
determining the candidate spot as a spot if the condition is satisfied; and discarding the candidate spot if the condition fails to be satisfied.

11. A data processing device for identifying a single photon emitting molecule from photon emissions recorded in image data, comprising:

a) an inputting unit configured to input a time sequence of intensity of a spot from the image data;

**characterised by**:

b) a transforming unit configured to form a line chart of time and intensity of the spot according to the time sequence of the inputting unit, wherein the line chart consists of a plurality of line segments;

c) a grid counting unit configured to divide the line chart of the transforming unit into a plurality of grids in a array, and count the number of the line segments and/or ends of the line segments in each grid;

d) a simplifying unit configured to subject the divided line chart to an erosion with a line structuring element according to numbers corresponding to the grids to transform the divided line chart to a simplified image, the simplified image containing grids with a first value or a second value;

e) an indicating unit configured to subject the simplified image to run-length coding to indicate connected domains;

f.i) a determining unit configured to calculate an area of each connected domain and determine that the connected domain corresponds to a single molecule if the area of the connected domain is greater than a first predetermined threshold; or

f.ii) a determining unit configured to calculate an area of each connected domain and determine that 1 is added to the number of the single molecules if the area of the connected domain is greater than a first predetermined threshold.

**12.** A data processing device as claimed in claim 11 parts (a) to (e) and f.i), further comprising a calculating unit configured to obtain a first number of the single molecules by calculation.

**13.** A data processing device as claimed in claim 11 parts a) to e) and f.i), further comprising:

a histogram obtaining unit configured to divide the intensity in groups according to a magnitude of the intensity to subject the numbers to frequency calculating to obtain a histogram,

wherein in the determining unit, a maximum value of the histogram of the histogram obtaining unit is found and it is determined that a peak providing the maximum value corresponds to a single molecule if the maximum value is greater than a second predetermined threshold and the peak providing the maximum value has a width greater than a third predetermined threshold.

**14.** A data processing device as claimed in claim 11 parts a) to e) and f.ii), further comprising:

1) a histogram obtaining unit configured to divide the intensity in groups according to a magnitude of the intensity to subject the numbers to frequency calculating to obtain a histogram,

wherein in the determining unit, a maximum value of the histogram of the histogram obtaining unit is found and it is determined that a peak providing the maximum value corresponds to a single molecule if the maximum value is greater than a second predetermined threshold and the peak providing the maximum value has a width greater than a third predetermined threshold, and

a calculating unit, in which a second number of the single molecules is acquired by calculation and a small one of the first and second numbers is taken as a final number of the single molecules; or

2) a histogram obtaining unit configured to divide the intensity in groups according to a magnitude of the intensity to subject the numbers to frequency calculating to obtain a histogram,

wherein in the determining unit,

a maximum value of the histogram is found and it is determined that 1 is added to the number of the single molecules if the maximum value is greater than a second predetermined threshold and the peak providing the maximum value has a width greater than a third predetermined threshold,

the number of the single molecules obtained from the histogram is compared to the number of the single molecules obtained from the run-length coding, and

a smallest one of the two numbers is taken as a final number of the single molecules.

**15.** A computer program product comprising instructions which when the program is executed by the computer, causes the computer to carry out the steps of the method of any of claims 1 to 10.

**Patentansprüche**

**1.** Computerimplementiertes Verfahren zum Identifizieren eines einzelnen Photonen emittierenden Moleküls aus in Bilddaten aufgezeichneten Photonenemissionen, wobei das Verfahren folgendes umfasst:

a) Eingabe einer Zeitsequenz der Intensität eines Punkts aus den Bilddaten; **gekennzeichnet durch**:

b) Erstellen eines Liniendiagramms der Zeit und Intensität des Punkts gemäß der Zeitsequenz, wobei das Liniendiagramm aus einer Mehrzahl von Liniensegmenten besteht;

c) Unterteilen des Liniendiagramms in eine Mehrzahl von Gittern in einem Feld, Zählen der Anzahl der Liniensegmente und/oder der Enden der Liniensegmente in jedem Gitter;

d) Unterziehen des aufgeteilten Liniendiagramms einer Erosion mit einem Linienstrukturierungselement gemäß Zahlen, die den Gittern entsprechen, um das unterteilte Liniendiagramm in ein vereinfachtes Bild umzuwandeln, wobei das vereinfachte Bild Gitter mit einem ersten Wert oder einem zweiten Wert enthält;

e) Unterziehen des vereinfachten Bilds einer Lauflängencodierung, um verbundene Bereiche anzuzeigen;

f) Berechnen einer Fläche jedes verbundenen Bereichs und Bestimmen, dass der verbundene Bereich einem einzelnen Molekül entspricht, wenn die Fläche des verbundenen Bereichs größer ist als ein erster vorbestimmter Schwellenwert.

**2.** Computerimplementiertes Verfahren zum Zählen einzelner Photonen emittierender Moleküle aus in Bilddaten aufgezeichneten Photonenemissionen, wobei das Verfahren folgendes umfasst:

a) Eingabe einer Zeitsequenz der Intensität eines Punkts aus den Bilddaten; **gekennzeichnet durch**:

b) Erstellen eines Liniendiagramms der Zeit und Intensität des Punkts gemäß der Zeitsequenz, wobei das Liniendiagramm aus einer Mehrzahl von Liniensegmenten besteht;

c) Unterteilen des Liniendiagramms in eine Mehrzahl von Gittern in einem Feld, Zählen der Anzahl der Liniensegmente und/oder der Enden der Liniensegmente in jedem Gitter;

d) Unterziehen des aufgeteilten Liniendiagramms einer Erosion mit einem Linienstrukturierungselement gemäß Zahlen, die den Gittern entsprechen, um das unterteilte Liniendiagramm in ein vereinfachtes Bild umzuwandeln, wobei das vereinfachte Bild Gitter mit einem ersten Wert oder einem zweiten Wert enthält;

e) Unterziehen des vereinfachten Bilds einer Lauflängencodierung, um verbundene Bereiche anzuzeigen; und

f.i) Berechnen einer Fläche jedes verbundenen Bereichs und Bestimmen, dass der verbundene Bereich einem einzelnen Molekül entspricht, wenn die Fläche des verbundenen Bereichs größer ist als ein erster vorbestimmter Schwellenwert und Erhalten eines ersten Zahlenwerts der einzelnen Moleküle durch Berechnung; oder

f.ii) Berechnen einer Fläche jedes verbundenen Bereichs und Bestimmen, dass 1 zu dem Zahlenwert der einzelnen Moleküle addiert wird, wenn die Fläche des verbundenen Bereichs größer ist als ein erster vorbestimmter Schwellenwert.

**3.** Computerimplementiertes Verfahren nach Anspruch 1, wobei dieses ferner folgendes umfasst:

g) Unterteilen der Intensität in Gruppen gemäß einer Stärke der Intensität, um die Zahlen einer Frequenzberechnung zu unterziehen, um ein Histogramm zu erhalten;

h) Ermitteln eines maximalen Werts des Histogramms und Bestimmen, dass eine Spitze, die den maximalen Wert bereitstellt, einem einzelnen Molekül entspricht, wenn der maximale Wert größer ist als ein zweiter vorbestimmter Schwellenwert, und die Spitze, die den maximalen Wert bereitstellt eine Breite aufweist, die größer ist als ein dritter vorbestimmter Schwellenwert.

**4.** Computerimplementiertes Verfahren nach Anspruch 2, wobei dieses ferner folgendes umfasst:

A.g) Unterteilen der Intensität in Gruppen gemäß einer Stärke der Intensität, um die Zahlen einer Frequenzberechnung zu unterziehen, um ein Histogramm zu erhalten;

A.h) Ermitteln eines maximalen Werts des Histogramms und Bestimmen, dass eine Spitze, die den maximalen Wert bereitstellt, einem einzelnen Molekül entspricht, wenn der maximale Wert größer ist als ein zweiter vorbestimmter Schwellenwert, und die Spitze, die den maximalen Wert bereitstellt eine Breite aufweist, die größer ist als ein dritter vorbestimmter Schwellenwert;

A.i) Erhalten eines zweiten Zahlenwerts der einzelnen Moleküle durch Berechnung und Verwenden eines kleinen Werts des ersten und des zweiten Zahlenwerts als einen finalen Zahlenwert der einzelnen Moleküle; oder

B.g) Unterteilen der Intensität in Gruppen gemäß einer Stärke der Intensität, um die Zahlen einer Frequenzberechnung zu unterziehen, um ein Histogramm zu erhalten;

B.h) Ermitteln eines maximalen Werts des Histogramms und Bestimmen, dass 1 zu dem Zahlenwert der einzelnen Moleküle addiert wird, wenn der maximale Wert größer ist als ein zweiter vorbestimmter Schwellenwert und die Spitze, die den maximalen Wert bereitstellt eine Breite aufweist, die größer ist als ein dritter vorbestimmter Schwellenwert;

B.i) Vergleichen des aus dem Histogramm erhaltenen Zahlenwerts der einzelnen Moleküle mit dem aus der Lauflängencodierung erhaltenen Zahlenwert der einzelnen Moleküle, und Verwenden des kleinsten der beiden Zahlenwerte als einen finalen Zahlenwert der einzelnen Moleküle.

5. Computerimplementiertes Verfahren nach einem der Ansprüche 1 bis 4, wobei vor dem Unterteilen des Liniendiagramms in die Mehrzahl von Gittern in dem Feld das Verfahren ferner das Filtern des Liniendiagramms umfasst; und/oder
wobei das Liniendiagramm in die Mehrzahl von Gittern in dem Feld unterteilt wird gemäß einem Zeitrahmen der Intensität bei Erfassung und einer Stärke der Intensität;
wobei das vereinfachte Bild optional ein binäres Bild ist, wobei der erste Wert 1 ist, und wobei der zweite Wert 0 ist.

6. Computerimplementiertes Verfahren nach einem der Ansprüche 3 bis 5, wobei Schritt g), A.g) oder B.g) folgendes umfasst:

Unterteilen der Intensität in N Gruppen gemäß der Stärke der Intensität und Berechnen von Frequenzen der Zahlenwerte in den N Gruppen:

wobei $n_i$ eine Summe der Frequenzen der Zahlenwerte einer i-ten Linie der Gitter darstellt, wobei j einen Zeitrahmen darstellt, wobei $g_{ij}$ eine Frequenz des Zahlenwerts des Gitters (i,j) darstellt, und wobei M den Zahlenwert der Zeitrahmen darstellt; wobei optional
das Histogramm mit einem L-förmigen Fenster äqualisiert wird:

. 12 is a flow chart of a method for i

ent disclosure;

wobei $n_p$ eine Äqualisation von $n_i$ darstellt, wobei $n_i$' eine Summe der Ergebnisse der Äqualisation von von $n_i$ darstellt, und wobei p eine ganze Zahl darstellt, die der Größe des L-förmigen Fensters und der i-ten Linie zugeordnet ist.

7. Computerimplementiertes Verfahren nach einem der Ansprüche 1 bis 6, wobei dieses ferner folgendes umfasst:

einen Bildvorverarbeitungsschritt, der folgendes umfasst: Analysieren des Bilds, um ein erstes Bild zu erhalten, wobei das Bild mindestens einen Bildpunkt umfasst; und
einen Punkterkennungsschritt, der folgendes umfasst:

Analysieren des ersten Bilds, um einen Punktbestimmungsschwellenwert zu berechnen;
Analysieren des ersten Bilds, um einen möglichen Punkt zu erfassen; und
Bestimmen, ob der mögliche Punkt ein Punkt gemäß dem Punktbestimmungsschwellenwert ist;

Erfassen der Zeitsequenz der Intensität des Punkts, wenn der mögliche Punkt ein Punkt ist; und
Verwerfen des möglichen Punkts, wenn der mögliche Punkt kein Punkt ist.

8. Computerimplementiertes Verfahren nach Anspruch 7, wobei der Bildvorverarbeitungsschritt folgendes umfasst:

i) Durchführen einer Hintergrundsubtraktion an dem Bild, um das erste Bild zu erfassen; optional Vereinfachen des Bilds nach der Hintergrundsubtraktion, um das erste Bild zu erfassen; oder
ii) Durchführen eines Filtervorgangs an dem Bild, um das erste Bild zu erfassen; oder
iii) Durchführen eines Filtervorgangs an dem Bild nach einer Hintergrundsubtraktion, um das erste Bild zu erfassen; optional Durchführen einer Vereinfachung an dem Bild nach der Hintergrundsubtraktion und dem Filtern, um das erste Bild zu erfassen; oder
iv) Durchführen einer Vereinfachung an dem Bild, um das erste Bild zu erfassen.

9. Computerimplementiertes Verfahren nach i), iii) oder iv) aus Anspruch 8, wobei das Vereinfachen folgendes ist:

1) ein Prozess, der ein binäres Bild ergibt; oder

2) das Erfassen einer Signal-Rausch-Abstandsmatrix gemäß dem Bild vor dem Vereinfachen umfasst, und Vereinfachen des Bilds gemäß der Signal-Rausch-Abstandsmatrix, um das erste Bild zu erfassen.

**10.** Computerimplementiertes Verfahren nach i), iii) oder iv) aus Anspruch 8, wobei das Bestimmen, ob der mögliche Punkt ein Punkt ist gemäß dem Punktbestimmungsschwellenwert, folgendes umfasst:

Suchen in dem ersten Bild nach einem Bildpunkt mit einer Konnektivität von über (h*h-1) als Mittelpunkt des möglichen Punkts, wobei h eine ungerade Zahl größer als 1 ist; und

Bestimmen, ob der Mittelpunkt des möglichen Punkts die Bedingung $Im_{ax}*AB_I*ceof_{guass}>T$ erfüllt, wobei $I_{max}$ eine maximale Intensität einer Mitte des Fensters h*h ist, wobei $A_{BI}$ eine Proportion von Pixeln in dem ersten Bild als festgelegter Wert in dem Fenster h*h ist, wobei $ceof_{guass}$ ein Korrelationskoeffizient zwischen einem Pixel in dem Fenster h*h und einer zweidimensionalen Gaußschen Verteilung ist, und wobei T der Punktbestimmungsschwellenwert ist;

Bestimmen des möglichen Punkts als einen Punkt, wenn die Bedingung erfüllt ist; und

Verwerfen des möglichen Punkts, wenn die Bedingung nicht erfüllt ist.

**11.** Datenverarbeitungsvorrichtung zum Identifizieren eines einzelnen Photonen emittierenden Moleküls aus in Bilddaten aufgezeichneten Photonenemissionen, wobei die Vorrichtung folgendes umfasst:

a) eine Eingabeeinheit, die für die Eingabe einer Zeitsequenz der Intensität eines Punkts aus den Bilddaten gestaltet ist; **gekennzeichnet durch**:

b) eine Transformationseinheit, die zum Erstellen eines Liniendiagramms der Zeit und Intensität des Punkts gemäß der Zeitsequenz der Eingabeeinheit gestaltet ist, wobei das Liniendiagramm aus einer Mehrzahl von Liniensegmenten besteht;

c) eine Gitterzähleinheit, die zum Unterteilen des Liniendiagramms der Transformationseinheit in eine Mehrzahl von Gittern in einem Feld gestaltet ist, und zum Zählen der Anzahl der Liniensegmente und/oder der Enden der Liniensegmente in jedem Gitter;

d) eine Vereinfachungseinheit, die zum Unterziehen des aufgeteilten Liniendiagramms einer Erosion mit einem Linienstrukturierungselement gemäß Zahlen, die den Gittern entsprechen, gestaltet ist, um das unterteilte Liniendiagramm in ein vereinfachtes Bild umzuwandeln, wobei das vereinfachte Bild Gitter mit einem ersten Wert oder einem zweiten Wert enthält;

e) eine Anzeigeeinheit, die zum Unterziehen des vereinfachten Bilds einer Lauflängencodierung gestaltet ist, um verbundene Bereiche anzuzeigen;

f.i) eine Bestimmungseinheit, die gestaltet ist zum Berechnen einer Fläche jedes verbundenen Bereichs und Bestimmen, dass der verbundene Bereich einem einzelnen Molekül entspricht, wenn die Fläche des verbundenen Bereichs größer ist als ein erster vorbestimmter Schwellenwert; oder

f.ii) eine Bestimmungseinheit, die gestaltet ist zum Berechnen einer Fläche jedes verbundenen Bereichs und zum Bestimmen, dass 1 zu dem Zahlenwert der einzelnen Moleküle addiert wird, wenn die Fläche des verbundenen Bereichs größer ist als ein erster vorbestimmter Schwellenwert.

**12.** Datenverarbeitungsvorrichtung nach a) bis e) und f.i) aus Anspruch 11, wobei diese ferner eine Recheneinheit umfasst, die zum Erhalten eines ersten Zahlenwerts der einzelnen Moleküle durch Berechnung gestaltet ist.

**13.** Datenverarbeitungsvorrichtung nach a) bis e) und f.i) aus Anspruch 11, wobei diese ferner folgendes umfasst:

eine Histogrammrealisierungseinheit, die gestaltet ist zum Unterteilen der Intensität in Gruppen gemäß einer Stärke der Intensität, um die Zahlen einer Frequenzberechnung zu unterziehen, um ein Histogramm zu erhalten; wobei in der Bestimmungseinheit ein ein maximaler Wert des Histogramms der Histogrammrealisierungseinheit ermittelt wird, und wobei bestimmt wird, dass eine Spitze, die den maximalen Wert bereitstellt, einem einzelnen Molekül entspricht, wenn der maximale Wert größer ist als ein zweiter vorbestimmter Schwellenwert, und die Spitze, die den maximalen Wert bereitstellt eine Breite aufweist, die größer ist als ein dritter vorbestimmter Schwellenwert.

**14.** Datenverarbeitungsvorrichtung nach a) bis e) und f.ii) aus Anspruch 11, wobei diese ferner folgendes umfasst:

eine Histogrammrealisierungseinheit, die gestaltet ist zum Unterteilen der Intensität in Gruppen gemäß einer Stärke der Intensität, um die Zahlen einer Frequenzberechnung zu unterziehen, um ein Histogramm zu erhalten;

wobei in der Bestimmungseinheit ein maximaler Wert des Histogramms der Histogrammrealisierungseinheit ermittelt wird, und wobei bestimmt wird, dass eine Spitze, die den maximalen Wert bereitstellt, einem einzelnen Molekül entspricht, wenn der maximale Wert größer ist als ein zweiter vorbestimmter Schwellenwert, und die Spitze, die den maximalen Wert bereitstellt eine Breite aufweist, die größer ist als ein dritter vorbestimmter Schwellenwert; und

eine Recheneinheit, in der ein zweiter Zahlenwert der einzelnen Moleküle durch Berechnung erfasst wird, und wobei ein kleiner Wert des ersten und des zweiten Zahlenwerts als ein finaler Zahlenwert der einzelnen Moleküle verwendet wird; oder

Histogrammrealisierungseinheit, die gestaltet ist zum Unterteilen der Intensität in Gruppen gemäß einer Stärke der Intensität, um die Zahlen einer Frequenzberechnung zu unterziehen, um ein Histogramm zu erhalten; wobei in der Bestimmungseinheit

ein maximaler Wert des Histogramms der Histogrammrealisierungseinheit ermittelt wird, und wobei bestimmt wird, dass 1 zu dem Zahlenwert der einzelnen Moleküle addiert wird, wenn der maximale Wert größer ist als ein zweiter vorbestimmter Schwellenwert und die Spitze, die den maximalen Wert bereitstellt eine Breite aufweist, die größer ist als ein dritter vorbestimmter Schwellenwert;

der aus dem Histogramm erhaltene Zahlenwert der einzelnen Moleküle verglichen wird mit dem aus der Lauflängencodierung erhaltenen Zahlenwert der einzelnen Moleküle; und

ein kleinster der beiden Zahlenwerte als ein finaler Zahlenwert der einzelnen Moleküle verwendet wird.

15. Computerprogrammprodukt, das Anweisungen umfasst, die, wenn das Programm durch den Computer ausgeführt wird, bewirken, dass der Computer die Schritte des Verfahrens nach einem der Ansprüche 1 bis 10 ausführt.

## Revendications

1. Procédé mis en oeuvre par ordinateur pour identifier une molécule émettrice de photons unique à partir d'émissions de photons enregistrées dans des données d'image, comprenant l'étape consistant à :

    a) entrer une séquence temporelle d'intensité d'un point à partir des données d'image ;

    **caractérisée par** les étapes consistant à :

    b) former un graphique linéaire du temps et de l'intensité du point selon la séquence temporelle, le graphique linéaire étant constitué d'une pluralité de segments de ligne ;
    c) diviser le graphique linéaire en une pluralité de grilles dans un réseau, en comptant le nombre de segments de ligne et/ou les extrémités des segments de ligne dans chaque grille ;
    d) soumettre le graphique linéaire divisé à une érosion avec un élément de structuration de ligne selon des nombres correspondant aux grilles pour transformer le graphique linéaire divisé en une image simplifiée, l'image simplifiée contenant des grilles avec une première valeur ou une seconde valeur ;
    e) soumettre l'image simplifiée à un codage par longueur de plage pour indiquer les domaines connectés ;
    f) calculer une aire de chaque domaine connecté et déterminer que le domaine connecté correspond à une molécule unique si l'aire du domaine connecté est supérieure à un premier seuil prédéfini.

2. Procédé mis en oeuvre par ordinateur pour compter des molécules émettrices de photons uniques à partir d'émissions de photons enregistrées dans des données d'image, comprenant l'étape consistant à :

    a) entrer une séquence temporelle d'intensité d'un point à partir des données d'image ;

    **caractérisée par** les étapes consistant à :

    b) former un graphique linéaire du temps et de l'intensité du point selon la séquence temporelle, le graphique linéaire étant constitué d'une pluralité de segments de ligne ;
    c) diviser le graphique linéaire en une pluralité de grilles dans un réseau, en comptant le nombre de segments de ligne et/ou les extrémités des segments de ligne dans chaque grille ;
    d) soumettre le graphique linéaire divisé à une érosion avec un élément de structuration de ligne selon des nombres correspondant aux grilles pour transformer le graphique linéaire divisé en une image simplifiée, l'image simplifiée contenant des grilles avec une première valeur ou une seconde valeur ;
    e) soumettre l'image simplifiée à un codage par longueur de plage pour indiquer les domaines connectés ; et

f.i) calculer une aire de chaque domaine connecté et déterminer que le domaine connecté correspond à une molécule unique si l'aire du domaine connecté est supérieure à un premier seuil prédéfini et obtenir un premier nombre des molécules uniques par calcul ; ou

f.ii) calculer une aire de chaque domaine connecté, et déterminer que 1 est ajouté au nombre des molécules uniques si l'aire du domaine connecté est supérieure à un premier seuil prédéfini.

**3.** Procédé mis en oeuvre par ordinateur selon la revendication 1, comprenant en outre les étapes consistant à :

g) diviser l'intensité en groupes en fonction d'une amplitude de l'intensité pour soumettre les nombres à un calcul de fréquence pour obtenir un histogramme ;

h) trouver une valeur maximale de l'histogramme et déterminer qu'un pic fournissant la valeur maximale correspond à une molécule unique si la valeur maximale est supérieure à un deuxième seuil prédéfini et le pic fournissant la valeur maximale a une largeur supérieure à un troisième seuil prédéfini.

**4.** Procédé mis en oeuvre par ordinateur selon la revendication 2, comprenant en outre les étapes consistant à :

A.g) diviser l'intensité en groupes en fonction d'une amplitude de l'intensité pour soumettre les nombres à un calcul de fréquence pour obtenir un histogramme ;

A.h) trouver une valeur maximale de l'histogramme et déterminer qu'un pic fournissant la valeur maximale correspond à une molécule unique si la valeur maximale est supérieure à un deuxième seuil prédéfini et le pic fournissant la valeur maximale a une largeur supérieure à un troisième seuil prédéfini ;

A.i) obtenir un second nombre des molécules uniques par calcul et prise d'un petit nombre parmi les premier et deuxième nombres comme nombre final des molécules uniques ; ou

B.g) diviser l'intensité en groupes en fonction d'une amplitude de l'intensité pour soumettre les nombres à un calcul de fréquence pour obtenir un histogramme ;

B.h) trouver une valeur maximale de l'histogramme, et déterminer que 1 est ajouté au nombre des molécules uniques si la valeur maximale est supérieure à un deuxième seuil prédéfini et que le pic fournissant la valeur maximale a une largeur supérieure à un troisième seuil prédéfini ;

B.i) comparer le nombre de molécules uniques obtenues à partir de l'histogramme au nombre de molécules uniques obtenues à partir du codage par longueur de plage et prendre le plus petit des deux nombres comme nombre final des molécules uniques.

**5.** Procédé mis en oeuvre par ordinateur selon l'une quelconque des revendications 1 à 4, avant de diviser le graphique linéaire en la pluralité de grilles dans le réseau, le procédé comprenant en outre le filtrage du graphique linéaire ; et/ou le graphique linéaire étant divisé en la pluralité de grilles dans le réseau en fonction d'un intervalle de temps de l'intensité lorsqu'il est collecté et d'une amplitude de l'intensité ;

éventuellement, l'image simplifiée étant une image binaire, la première valeur étant 1 et la seconde valeur étant 0.

**6.** Procédé mis en oeuvre par ordinateur selon l'une quelconque des revendications 3 à 5, l'étape g), A.g) ou B.g) comprenant les étapes consistant à :

diviser l'intensité en N groupes en fonction de l'amplitude de l'intensité et calculer les fréquences des nombres dans les N groupes :

$$n_i = \sum_{0<=j<=M} g_{i,j}, \; 0<=i<=N$$

$n_i$ représentant une somme des fréquences des nombres d'une $i^e$ ligne des grilles, j représentant une trame temporelle, $g_{ij}$ représentant une fréquence du nombre de grilles (i, j), et M représentant le nombre des trames temporelles ; éventuellement,

égaliser l'histogramme avec une fenêtre en forme de L :

$$n_i' = \sum_{i-L/2<=p<=i+L/2} n_p, \; 0<=i<=N$$

$n_p$ représentant l'égalisation de $n_i$, $n_i$ représentant une somme de résultats de l'égalisation de $n_i$, et p représentant un entier associé à la taille de la fenêtre en forme de L et de la $i^e$ ligne.

7. Procédé mis en oeuvre par ordinateur selon l'une quelconque des revendications 1 à 6, comprenant en outre :

une étape de prétraitement d'image, comprenant l'étape consistant à :

analyser l'image de sorte à obtenir une première image, l'image comprenant au moins un point de pixel ; et
une étape de détection de point comprenant les étapes consistant à :

analyser la première image de sorte à calculer un seuil de détermination de point ;
analyser la première image de sorte à acquérir un point candidat ; et
déterminer si le point candidat est un point en fonction du seuil de détermination de point,

acquérir la séquence temporelle de l'intensité du point si le point candidat est un point, et
rejeter le pont candidat si le point candidat n'est pas un point.

8. Procédé mis en oeuvre par ordinateur selon la revendication 7, l'étape de prétraitement d'image comprenant les étapes consistant à i) l'exécuter une soustraction en arrière-plan sur l'image de sorte à acquérir la première image ; éventuellement, simplifier l'image après la soustraction en arrière-plan de sorte à acquérir la première image ; ou ii) exécuter un filtrage sur l'image de sorte à acquérir la première image ; ou iii) exécuter un filtrage sur l'image après une soustraction en arrière-plan, de sorte à acquérir la première image ; éventuellement exécuter une simplification sur l'image après une soustraction en arrière-plan et le filtrage, de sorte à acquérir la première image ; ou iv) exécuter une simplification sur l'image de sorte à acquérir la première image.

9. Procédé mis en oeuvre par ordinateur selon la revendication 8, parties i), iii) ou iv), la simplification étant : 1) un procédé pour produire une image binaire ; ou 2) comprenant l'acquisition d'une matrice de rapport signal sur bruit selon l'image avant la simplification, et la simplification de l'image selon la matrice de rapport signal sur bruit de sorte à acquérir la première image.

10. Procédé mis en oeuvre par ordinateur selon la revendication 8, parties i), iii) ou iv), la détermination du fait de savoir si le point candidat est un point selon le seuil de détermination de point comprenant les étapes consistant à :

rechercher dans la première image un point pixel avec une connectivité supérieure à (h*h-1) comme centre du point candidat, où h est un nombre impair supérieur à 1 ; et
déterminer si le centre du point candidat satisfait une condition de $I_{max} * A_{BI} * ceof_{guass} > T$, où max est une intensité maximale d'un centre de la fenêtre h*h, $A_{BI}$ est une proportion de pixels dans la première image étant une valeur définie dans la fenêtre h*h, $ceof_{guass}$ est un coefficient de corrélation entre un pixel dans la fenêtre h*h et une distribution gaussienne bidimensionnelle, et T est le seuil de détermination de point ;
déterminer le point candidat comme un point si la condition est satisfaite ; et
rejeter le point candidat si la condition n'est pas satisfaite.

11. Dispositif de traitement de données pour identifier une molécule émettrice de photons unique à partir d'émissions de photons enregistrées dans des données d'image, comprenant :

a) une unité d'entrée conçue pour entrer une séquence temporelle d'intensité d'un point à partir des données d'image ;

**caractérisée par** :

b) une unité de transformation conçue pour former un graphique linéaire du temps et de l'intensité du point selon la séquence temporelle de l'unité d'entrée, le graphique linéaire étant constitué d'une pluralité de segments de ligne ;
c) une unité de comptage de grille conçue pour diviser le graphique linéaire de l'unité de transformation en une pluralité de grilles dans un réseau, en compter le nombre de segments de ligne et/ou les extrémités des segments de ligne dans chaque grille ;
d) une unité de simplification conçue pour soumettre le graphique linéaire divisé à une érosion avec un élément de structuration de ligne selon des nombres correspondant aux grilles pour transformer le graphique linéaire divisé en une image simplifiée, l'image simplifiée contenant des grilles avec une première valeur ou une seconde valeur ;

e) une unité d'indication conçue pour soumettre l'image simplifiée à un codage par longueur de plage pour indiquer les domaines connectés ;

f.i) une unité de détermination conçue pour calculer une aire de chaque domaine connecté et déterminer que le domaine connecté correspond à une molécule unique si l'aire du domaine connecté est supérieure à un premier seuil prédéfini ; ou

f.ii) une unité de détermination conçue pour calculer une aire de chaque domaine connecté, et déterminer que 1 est ajouté au nombre des molécules uniques si l'aire du domaine connecté est supérieure à un premier seuil prédéfini.

12. Dispositif de traitement de données selon la revendication 11 parties (a) à (e) et f.i), comprenant en outre une unité de calcul conçue pour obtenir un premier nombre des molécules uniques par calcul.

13. Dispositif de traitement de données selon la revendication 11, parties a) à e) et f.i), comprenant en outre :

une unité d'obtention d'histogramme conçue pour diviser l'intensité en groupes en fonction d'une amplitude de l'intensité pour soumettre les nombres à un calcul de fréquence pour obtenir un histogramme,

dans l'unité de détermination, une valeur maximale de l'histogramme de l'unité d'obtention d'histogramme étant trouvée et il est déterminé qu'un pic fournissant la valeur maximale correspond à une molécule unique si la valeur maximale est supérieure à un deuxième seuil prédéfini et le pic fournissant la valeur maximale a une largeur supérieure à un troisième seuil prédéfini.

14. Dispositif de traitement de données selon la revendication 11, parties a) à e) et f.ii), comprenant en outre :

1) une unité d'obtention d'histogramme conçue pour diviser l'intensité en groupes en fonction d'une amplitude de l'intensité pour soumettre les nombres à un calcul de fréquence pour obtenir un histogramme,

dans l'unité de détermination, une valeur maximale de l'histogramme de l'unité d'obtention d'histogramme étant trouvée et il est déterminé qu'un pic fournissant la valeur maximale correspond à une molécule unique si la valeur maximale est supérieure à un deuxième seuil prédéfini et le pic fournissant la valeur maximale a une largeur supérieure à un troisième seuil prédéfini, et

une unité de calcul, dans laquelle un second nombre des molécules uniques est acquis par calcul et un petit nombre parmi les premier et deuxième nombres est pris comme nombre final des molécules uniques ; ou

2) une unité d'obtention d'histogramme conçue pour diviser l'intensité en groupes en fonction d'une amplitude de l'intensité pour soumettre les nombres à un calcul de fréquence pour obtenir un histogramme,

dans l'unité de détermination,

une valeur maximale de l'histogramme étant trouvée et il est déterminé que 1 est ajouté au nombre des molécules uniques si la valeur maximale est supérieure à un deuxième seuil prédéfini et que le pic fournissant la valeur maximale a une largeur supérieure à un troisième seuil prédéfini ;

le nombre de molécules uniques obtenues à partir de l'histogramme étant comparé au nombre de molécules uniques obtenues à partir du codage par longueur de plage, et

un plus petit des deux nombres étant pris en compte comme un nombre final des molécules uniques.

15. Produit-programme informatique comprenant des instructions qui, lorsque le programme est exécuté par l'ordinateur, amènent l'ordinateur à effectuer les étapes du procédé selon l'une quelconque des revendications 1 à 10.

start

S01

Inputting a time sequence of intensity of a spot from the image

S02

forming a line chart of time and intensity of the spot according to the time sequence, in which the line chart consists of a plurality of line segments

S03

dividing the line chart into a plurality of grids in an array, counting the number of the line segments and/or ends of the line segments in each grid

S04

subjecting the divided line chart to a line erosion according to numbers corresponding to the grids to transform the divided line chart to a simplified image

S05

subjecting the simplified image to run-length coding to indicate connected domains

S06

calculating an area of each connected domain and determining that the connected domain corresponds to a single molecule if the area of the connected domain is greater than a first predetermined threshold

end

Fig.1

start

inputting image

S31 — image pre-processing step

S32

S321 — analyzing a first image so as to compute a spot determining threshold

S322 — analyzing the first image so as to acquire a candidate spot

S323 — judging whether the candidate spot is a spot according to the spot determining threshold

Yes

S324 — obtaining time sequence of an intensity of a spot

S325 — discarding the candidate spot

No

end

Fig.2

Fig. 3

start

S41

searching in the first image for a pixel point with connectivity greater than (h*h-1) as a center of the candidate spot

S42

judging whether the center of the candidate spot satisfies a condition

S43

yes

determining the candidate spot as the spot included in the image to be processed

S44

no

discarding the candidate spot

end

Fig. 4

| NotMax | NotMax | NotMax |
|--------|--------|--------|
| NotMax | Max | NotMax |
| NotMax | NotMax | NotMax |

Fig. 5

Fig. 6

| 1 | 2 | 0 | 0 | 0 | 0 | 0 | 0 |
|---|---|---|---|---|---|---|---|
| 2 | 2 | 1 | 2 | 0 | 0 | 0 | 0 |
| 0 | 1 | 2 | 1 | 1 | 0 | 0 | 0 |
| 0 | 0 | 0 | 0 | 1 | 0 | 0 | 0 |
| 0 | 0 | 0 | 0 | 1 | 1 | 0 | 0 |
| 0 | 0 | 0 | 0 | 0 | 2 | 1 | 0 |

Fig. 7

Fig. 8

Fig. 9

Fig. 10

Fig. 11

start

inputting a time sequence of intensity of a spot from the image

forming a line chart of time and intensity of the spot according to the time sequence, in which the line chart consists of a plurality of line segments

dividing the line chart into a plurality of grids in an array, counting the number of the line segments and/or ends of the line segments in each grid

subjecting the divided line chart to a line erosion according to numbers corresponding to the grids to transform the divided line chart to a simplified image

subjecting the simplified image to run-length coding to indicate connected domains

calculating an area of each connected domain and determining that the connected region corresponds to a single molecule if the area of the connected domain is greater than a first predetermined threshold

end

S51

subjecting the numbers to frequency calculating to obtain a histogram

S52

finding a maximum value of the histogram and determining that a peak providing the maximum value corresponds to a single molecule if the maximum value is greater than a second predetermined threshold and the peak providing the maximum value has a width greater than a third predetermined threshold

end

Fig. 12

W

| 1 | 3 | 0 | 2 | 1 |

|← L1 →|

| 0 | 1 | 0 | 0 | 0 |

Fig. 13

W

| 1 | 3 | 0 | 2 | 1 |

|← L1 →|

| 0 | 1 | 0 | 0 | 0 |

Fig. 14

| 1 | 1 | 1 |
| 1 | 1 | 1 |
| 1 | 1 | 1 |

Fig. 15

| 9 | 9 | 9 | 9 | 0 | 0 | 0 | 0 |
| 9 | 9 | 9 | 0 | 0 | 0 | 0 | 0 |
| 0 | 9 | 9 | 0 | 7 | 7 | 0 | 0 |
| 0 | 0 | 0 | 0 | 7 | 7 | 0 | 0 |
| 0 | 0 | 0 | 0 | 7 | 7 | 7 | 7 |
| 0 | 0 | 0 | 0 | 7 | 7 | 7 | 7 |
| 0 | 0 | 0 | 0 | 7 | 7 | 7 | 7 |
| 0 | 0 | 0 | 0 | 7 | 7 | 7 | 7 |

Fig. 16

start

S81

inputting a time sequence of intensity of a spot from the image

S82

forming a line chart of time and intensity of the spot according to the time sequence, in which the line chart consists of a plurality of line segments

S83

dividing the line chart into a plurality of grids in an array, counting the number of the line segments and/or ends of the line segments in each grid

S84

subjecting the divided line chart to a line erosion according to numbers corresponding to the grids to transform the divided line chart to a simplified image

S85

subjecting the simplified image to run-length coding to indicate connected domain

S86

calculating an area of each connected domain, and determining that the connected domain corresponds to a single molecule if the area of the connected domain is greater than a first predetermined threshold

S87

obtaining a first number of the single molecules by calculation

end

Fig. 17

start

Inputting a time sequence of intensity of a spot from the image

forming a line chart of time and intensity of the spot according to the time sequence, in which the line chart consists of a plurality of line segments

dividing the line chart into a plurality of grids in an array, counting the number of the line segments and/or ends of the line segments in each grid

subjecting the divided line chart to a line erosion according to numbers corresponding to the grids to transform the divided line chart to a simplified image

subjecting the simplified image to run-length coding to indicate connected domains

calculating an area of each connected domain, and determining that the connected domain corresponds to a single molecule if the area of the connected domain is greater than a first predetermined threshold

obtaining a first number of the single molecules by calculation

S94 ── taking a small one of the first and second numbers as a final number of the single molecules

S91 ── subjecting the numbers to frequency calculating to obtain a histogram

S92 ── finding a maximum value of the histogram, and determining that a peak providing the maximum value corresponds to a single molecule if the maximum value is greater than a second predetermined threshold and the peak providing the maximum value has a width greater than a third predetermined threshold

end

S93 ── obtaining a second number of the single molecules by calculation

Fig. 18

34

start

S61 — Inputting a time sequence of intensity of a spot from the image

S62 — forming a line chart of time and intensity of the spot according to the time sequence, in which the line chart consists of a plurality of line segments

S63 — dividing the line chart into a plurality of grids in an array, counting the number of the line segments and/or ends of the line segments in each grid

S64 — subjecting the divided line chart to a line erosion according to numbers corresponding to the grids to transform the divided line chart to a simplified image

S65 — subjecting the simplified image to run-length coding to indicate connected domains

S66 — calculating an area of each connected domain, and determining that 1 is added to the number of the single molecules if the area of the connected domain is greater than a first predetermined threshold

end

Fig. 19

start

Inputting a time sequence of intensity of a spot from the image

forming a line chart of time and intensity of the spot according to the time sequence, in which the line chart consists of a plurality of line segments

dividing the line chart into a plurality of grids in an array, counting the number of the line segments and/or ends of the line segments in each grid

subjecting the divided line chart to a line erosion according to numbers corresponding to the grids to transform the divided line chart to a simplified image

subjecting the simplified image to run-length coding to indicate connected domains

calculating an area of each connected domain, and determining that 1 is added to the number of the single molecules if the area of the connected domain is greater than a first predetermined threshold

S73

comparing the number of the single molecules obtained from the histogram to the number of the single molecules obtained from the run-length coding and taking a small one of the two numbers as a final number of the single molecules

S71

subjecting the numbers to frequency calculating to obtain a histogram

S72

finding a maximum value of the histogram, and determining that 1 is added to the number of the single molecules if the maximum value is greater than a second predetermined threshold and the peak providing the maximum value has a width greater than a third predetermined threshold

end

Fig. 20

Fig. 21

Fig. 22

Fig. 23

Fig. 24

400

402

| second inputting unit | second transforming unit |
|---|---|

404

408

| second simplifying unit | second grid counting unit |
|---|---|

406

409

| second indicating unit | second histogram obtaining unit |
|---|---|

416

| second determining unit |
|---|

410

| second calculating unit |
|---|

412

Fig. 25

600

602

| third inputting unit | third transforming unit |
|---|---|

604

| third grid counting unit |
|---|

606

| third simplifying unit |
|---|

608

| third indicating unit |
|---|

609

| third determining unit |
|---|

610

Fig. 26

<u>600</u>

Fig. 27

<u>300</u>

Fig. 28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2017098838 W
- CN 201611129604
- CN 201710607586

**Non-patent literature cited in the description**

- **Y. GAO et al.** Single molecule targeted sequencing for cancer gene mutation detection. *Scientific Reports,* May 2016, vol. 6, 26110-26120

- **H. MCGUIRE et al.** Automating Single Subunit Counting of Membrane Proteins in Mammalian Cells. *Journal of Biological Chemistry,* October 2012, vol. 287 (43), 35912-35921